# EUROPEAN PATENT SPECIFICATION

(11) **EP 4 476 106 B1**
(45) Date of publication and mention of the grant of the patent: **21.01.2026**
(21) Application number: 23703222.2
(22) Date of filing: 07.02.2023
(51) Int. Cl.: B60T 8/36, B60T 8/38

(54) **BRAKE MODULATOR WITH MULTI-INTERFACE COVER PLATE**
BREMSMODULATOR MIT ABDECKPLATTE MIT MEHREREN SCHNITTSTELLEN
MODULATEUR DE FREIN AVEC PLAQUE DE RECOUVREMENT MULTI-INTERFACE

(30) Priority: 11.02.2022 WO PCT/EP2022/053331
(43) Date of publication of application: 18.12.2024
(73) Proprietor: ZF CV Systems Europe BV, 1170 Brüssel (BE)
(72) Inventor: LANGO, Adam, 54-034 Wroclaw (PL); TOMA, Leszek, 52-013 Wroclaw (PL)
(74) Representative: Schäferjohann, Volker
(86) International application number: PCT/EP2023/052910
(87) International publication number: WO 2023/152102

(56) References cited:
- US-A1- 2012 080 935

## Description

The invention relates to a brake modulator for providing an anti-lock (ABS) braking function to a vehicle and preferably, as a part of an Anti-Lock Braking System (ABS). The brake modulator comprises a main body having a first supply or inlet valve cavity, a second supply or inlet valve cavity, a first exhaust valve cavity, a second exhaust valve cavity, and a relay valve cylinder having a main cylinder axis. The first supply valve cavity, the second supply valve cavity, the first exhaust valve cavity, the second exhaust valve cavity, and the relay valve cylinder open towards an assembly side of the main body. The brake modulator further comprises a supply port for receiving supply pressure, a relay valve configured to receive the supply pressure and to provide a main pressure depending on a brake request (or a driver's brake demand), and an ABS valve arrangement comprising a first ABS valve unit for a first brake channel and a second ABS valve unit for a second brake channel. The relay valve being received in the relay valve cylinder. The first ABS valve unit is configured to receive the main pressure and to provide first brake pressure to the first brake channel dependent on a first ABS control signal. A first ABS supply valve of the first ABS valve unit is received in the first supply valve cavity, and a first ABS exhaust valve of the first ABS valve unit is received in the first exhaust valve cavity. The second ABS valve unit is configured to receive the main pressure and to provide second brake pressure to the second brake channel dependent on a second ABS control signal. A second ABS supply valve of the second ABS valve unit is received in the second supply valve cavity, and a second ABS exhaust valve of the second ABS valve unit is received in the second exhaust valve cavity. The brake modulator also comprises a main cover for closing of the assembly side of the main body. The invention further relates to an assembly method for a brake modulator and a commercial vehicle comprising a brake modulator.

For braking a vehicle, a pressure medium, generally pressurized air in the case of commercial vehicles, is supplied to individual brake actuators or brake cylinders of the vehicle. Dependent on a brake request provided by a driver of the vehicle as a driver's brake demand and/or provided by a vehicle control system, one or more brake modulators provide pressurized air to the brake actuators. In anti-lock braking systems (ABS), also called lock-protected braking systems, an ABS valve unit for pressure modulation is provided for each brake channel associated to wheels of respective sides of the vehicle. For example, a first brake channel may be provided for brake cylinders on a rear left side of the vehicle while a second brake channel is provided for brake cylinders on a rear right side of the vehicle.

ABS valve units generally comprise a supply valve and an exhaust valve. By means of the supply valve, the respective brake channel can be alternately connected to or shut off from a source, generally a relay valve, providing a main pressure. The supply valve modulates the main pressure dependent on ABS control signals and provides a brake pressure to the respective brake channel. The brake channel may be alternately connected to or shut off from an exhaust using the exhaust valve, wherein the connection to the exhaust usually leads via a check valve and/or a silencer into the ambient air. For braking the wheels in correspondence with the respective brake channel, the supply valve opens and supplies a brake pressure to the brake cylinders. If the wheels lock, the ABS supply valve closes and thereby shuts off the brake channel from the pressurized air supplied by the relay valve. At the same time, the exhaust valve opens and releases pressurized air from the brake cylinders. Consequently, the brake cylinders open and allow the wheels associated to these brake cylinders to rotate again, thereby preventing slippage of the wheels. The brake cylinders are then closed again (if continued braking is desired) by opening the ABS supply valve and closing the exhaust valve. This whole cycle usually is repeated multiple times within seconds. The ABS valve units are controlled via the ABS control signals generally supplied by an ECU of the brake system or the vehicle. ABS valve units having a supply valve and an exhaust valve as described above are known from US 10,981,551 B2 and US 10,011,253 B2

In some cases, ABS valve units are integrated into a brake modulator providing the modulated main pressure. Such a brake modulator comprising the relay valve as well as the ABS valve units can be preassembled prior to integration of the brake system into the vehicle. This facilitates final assembly of the brake system which is generally carried out in confined spaces and consequently a risk for assembly errors is reduced.

In combined brake modulators for providing an ABS brake function, the relay valve is generally received in a relay valve cylinder formed in a main body, the first and second ABS supply valves are received in corresponding first and second supply valve cavities of the main body, and the first and second ABS exhaust valves are received in corresponding first and second exhaust valve cavities of the main body. For further facilitating assembly of the brake modulators, the cavities as well as the relay valve cylinder are all open to an assembly side such that the main body does not need to be rearranged during assembly. After insertion of the relay valve and the first and second ABS valve units into the main body, the assembly side of the main body of known brake modulators is closed by a cover. Such a cover may be a simple flat steel plate. Alternatively, the cover may be made of plastic or aluminum.

Even though such simple covers are cost efficient, it is difficult to ensure proper alignment of such known covers with the main body. Moreover ensuring proper sealing of the main body is hard to achieve when using such covers. This all the more important when the brake modulator such as the one according to the present invention includes plurality of cavities including the first supply or inlet valve cavity, the second supply or inlet valve cavity, the first exhaust valve cavity, the second exhaust valve cavity, and the relay valve cylinder.

Document US 2012/080935 A1 discloses a known brake modulator.

It is therefore an object of the present invention to provide a brake modulator for providing an ABS brake function that has little to no leakage of pressurized fluid that is used to operate the brake modulator, and at the same time allows for proper alignment of multiple components thereby simplifying the manufacture.

In order to solve this object, the present invention proposes in a first aspect a brake modulator according to claim 1. In particular, the main cover of the inventive brake modulator comprises a first supply cover portion for the first supply valve cavity, a second supply cover portion for the second supply valve cavity, a first exhaust cover portion for the first exhaust valve cavity, and a second exhaust cover portion for the second exhaust valve cavity. The brake modulator further comprises a relay valve cover plate for closing the relay valve cylinder on the assembly side, wherein the relay valve cover plate is either formed separately from the main cover or is integrally formed with the main cover, wherein the relay valve cover plate is arranged between a relay piston of the relay valve received in the relay valve cylinder and the main cover along the main cylinder axis. One or more cover portions of the first supply cover portion, the second supply cover portion, the first exhaust cover portion and the second exhaust cover portion is formed separately from a main cover plate of the main cover. Optionally, all of the first supply cover portion, the second supply cover portion, the first exhaust cover portion and the second exhaust cover portion are formed separately of the main cover.

The first supply valve cavity, the second supply valve cavity, the first exhaust valve cavity, the second exhaust valve cavity and the relay valve cylinder preferably open towards a common assembly side of the main body. The first supply valve cavity, the second supply valve cavity, the first exhaust valve cavity, the second exhaust valve cavity and the relay valve cylinder are then accessible from a common side during assembly. It is thus not necessary to rearrange the main body for inserting the ABS valve units and the relay valve in their respective cavities or cylinders respectively. An assembly process of the brake modulator can be accelerated. Moreover, manufacturing of the main cover plate is facilitated, since main cover plate having parallel surfaces may be used. If the first supply valve cavity, the second supply valve cavity, the first exhaust valve cavity, the second exhaust valve cavity and/or the relay valve cylinder are arranged on different assembly sides, than the main cover plate needs to be an angled.

Providing the first supply cover portion, the first exhaust cover portion, the second supply cover portion and the second exhaust cover portion can facilitate exact closure and/or sealing of the first supply valve cavity, the first exhaust valve cavity, the second supply valve cavity and the second exhaust valve cavity. When the relay valve cover plate is integrally formed with the main cover, it can ensure proper alignment of the cover plate with and sealing of the main body during assembly of the brake modulator. A relay valve cover plate being integrally formed with the main cover means that the main cover and the relay valve cover plate are formed as a single part. The supply cover portions and the exhaust cover portions being formed separately from the main cover plate means that the first supply cover portion, the second supply cover portion, the first exhaust cover portion and/or the second exhaust cover portion are separate elements from the main cover plate. The cover plates may thus be handled individually of the main cover plate. During assembly, the one or more cover portions formed separately from the main cover plate may be inserted into their respective valve cavity independently from the main cover plate. Hence, one or more of the first supply valve cavity, second supply valve cavity, first exhaust valve cavity and/or second exhaust valve cavity can be closed individually by a respective cover portion. The first supply cover portion corresponds to or is the respective cover portion to the first supply valve cavity. Analogously, the first exhaust cover portion corresponds to the first exhaust valve cavity, the second supply cover portion corresponds to the second supply valve cavity and the second exhaust cover portion corresponds to the second exhaust valve cavity.

Embodiments having a first supply cover portion, a second supply cover portion, a first exhaust cover portion and a second exhaust cover portion integrally formed with a main cover plate of the main cover of the brake modulator have four or more interfaces to the main body resulting in a long tolerance chain as all the interfaces need to be provided at the correct spatial relationship to each other (and their corresponding cavity). The tolerance chain is even longer if the relay valve cover plate is integrally formed with the main cover plate. If the cover portions are integrally formed with the main cover, the interfaces have to be manufactured at high precision to ensure correct assembly and to prevent leakages, which results in high manufacturing cost. Moreover, some materials are not usable for the integrally formed main cover, since achievable tolerances are limited when using these materials. Consequently, expensive materials or materials that are difficult to machine have to be used which leads to high overall cost of the brake modulator.

The inventors have found that assembly and manufacture of the brake modulator is substantially facilitated when a first supply cover portion, second supply cover portion, first exhaust cover portion and/or second exhaust cover portions separately formed from the main cover plate is provided. The first supply cover portion, second supply cover portion, first exhaust cover portion and/or second exhaust cover portion can be manufactured and assembled independently of the main cover plate, which in turn has less tolerance interdependencies. Interdependencies between a position of the first and second supply cover portions and the first and second exhaust cover portions one the one hand and the relay valve cover on the other hand are reduced or eliminated. The main cover is manufacturable at lower tolerances, resulting in decreased manufacturing cost. The one or more separately formed cover portions are also producible at low cost, since only tolerances with regard to the respective valve cavity the cover portion is associated with need to be considered during production of said cover portion. Moreover, tolerance requirements with regard to the main cover may be met even if the main cover is formed by injection molding, in particular injection molding of a plastic material.

Assembly of the brake modulator according to the first aspect of the invention is facilitated, since alignment of the cover portions in their respective cavities is relatively easy. There are less or no multiple dependencies and the tolerance chain of the parts to be assembled is short, so that the risk of jammed parts during assembly of the brake modulator is reduced. The main cover may be directly fixed to the main body, for example via screws. Preferably, the main cover may be fixed to the main body via a fixing element, particularly preferred a cover, cap and/or valve carrier. Preferably, the main cover and/or the main cover plate is made from a plastic material. The relay valve cover plate may ensure proper sealing of the relay valve cylinder.

The main cylinder axis of the relay valve cylinder is preferably formed perpendicular to a relay valve cylinder opening towards the assembly side. The main cylinder axis is a central axis of the relay valve cylinder. During operation of the brake modulator, the relay piston performs a stroke movement along the main cylinder axis. The main cylinder axis thus defines a movement path of the relay piston arranged in the relay valve cylinder. The relay piston is slidably received in the relay valve cylinder for performing a stroke movement. The relay valve cylinder preferably comprises a cylindrical recess abutting the relay valve cover plate when the relay valve cover plate is (partially) received in the relay valve cylinder. Additionally or alternatively, the relay valve cover plate may comprise a shoulder for abutting the main body outside the relay valve cylinder, preferably on the assembly side. By abutting the main body, the shoulder prevents movement of the relay valve cover along the main cylinder axis with respect to a first direction away from the assembly side. The relay valve cover plate is preferably fixed to the main body via screws. Alternatively or additionally, the relay valve cover plate may be held in the relay valve cylinder (with respect to a second direction opposite the first direction) by another element of the brake modulator. The relay valve cover plate is then preferably positively fixed in the main body and/or clamped to the main body.

The relay valve may be fully or partially received in the relay valve cylinder. When the main cover is placed on top of the relay valve cover plate (if the main cover and the relay valve cover plate are formed separately), the main cover prevents movement of the relay valve cover plate in the first direction along the main cylinder axis (out of the relay valve cylinder on the opening side).

It shall be understood that the first supply valve cavity, the second supply valve cavity, the first exhaust valve cavity, the second exhaust valve cavity, and the relay valve cylinder are only open towards the assembly side of the main body as long as these cavities and the cylinder are not closed by the first supply cover portion, the second supply cover portion, the first exhaust cover portion, the second exhaust cover portion, the main cover and the relay valve cover. In the assembled state of the brake modulator, the first supply valve opening of the first supply cavity, a second supply valve opening of the second supply cavity, a first exhaust valve opening of the first exhaust cavity, a second exhaust valve opening of the second exhaust cavity, and a relay cylinder opening of the relay cylinder are closed. The supply port is preferably formed on the main body.

In a first preferred embodiment of the invention, the main cover plate of the main cover holds the one or more cover portions formed separately from the main cover in its respective cavity. Hence, if the first supply cover portion is formed separately from the main cover plate it is held in the first supply valve cavity by the main cover. Analogously the second supply cover portion is held in the second supply valve cavity, the first exhaust cover portion is held in the first exhaust valve cavity and/or the second exhaust valve cover portion is held in the second exhaust valve cavity by the main cover plate, if the respective cover portion is formed separately from the main cover plate. The separately formed cover portion or portions are then positively retained in its or their respective cavity by the main cover plate. Proper closure of the respective cavity may be ensured.

Preferably, the one or more cover portions formed separately from the main cover comprise wings, the wings laterally extending from a cover portion body of the respective cover portion, wherein the main cover preferably clamps the laterally extending wings of the one or more cover portions to the main body. It shall be under stood that all of the cover potions may have wings or that only one, two or three of the first supply cover portion, second supply cover portion, first exhaust cover portion and/or second exhaust cover portion may have wings laterally extending from a cover portion body. For example, wings of a first supply cover portion may extend laterally from a first supply cover portion body of said first supply cover portion. The wings can help in aligning the cover portion within its corresponding valve cavity and/or in securing the cover portion to the main body and/or within the corresponding valve cavity. The lateral side is transverse to a depth (depth direction) of the respective cavity. The depth direction is preferably perpendicular to an opening plane of the respective cavity, in particular to an opening plane on the assembly side. For example, the lateral side to which the wings of a first cover portion extend from the first cover portion body is a radial side (oriented to a mantle surface), when the first supply valve cavity is a cylindrical cavity having a circular bottom face. Usually the lateral side is transverse to a main axis of the respective cavity.

Preferably, the wings are tapered wings. Tapered wings may taper to a point opposite the cover portion body they extend from. The one or more cover portions formed separately from the main cover may comprise only one wing. However, preferably the cover portion or cover portions formed separately from the main cover comprise two wings. The wings are preferably evenly distributed over the circumference and/or lateral side of the respective cover portion body. In case of two wings said wings preferably extend on opposite sides from the cover portion body. The separately formed cover portion may also comprise more than two wings, preferably three, four, five or six wings. The one or more cover portions formed separately from the main cover comprise wings is to be understood that if the first supply cover portion is formed separately from the main cover plate then the first supply cover portion preferably comprises wings. In case the first supply cover portion and the first exhaust cover portion are both formed separately from the main cover plate, then both the first supply cover portion as well as the first exhaust cover portion may comprise wings. Hence, in the preferred embodiment each separately formed cover portions comprises its own wings. The wings may be used for securing the respective separately formed cover portion with regard to its respective cavity. The wings may be clamped to the main body. However, other forms of fixing the laterally extending wings to the main body, such as gluing, screwing or welding, are also possible. The wings may also be positively retained in the main body or a cavity of the man body.

In a further preferred embodiment, the one or more cover portions formed separately from the main cover comprise one or more centering pins for centering the cover portion with respect to the corresponding cavity. Preferably, all the cover portions formed separately from the main cover comprise one or more centering pins. However, it is also possible that only some of the separately formed cover portions comprise centering pins. Centering pins help in aligning the separately formed cover portion or cover portions with regard to their respective valve cavity or valve cavities. For example, centering pins of a first supply cover portion formed separately from the main cover plate can be inserted in corresponding holes in the main body for aligning the first supply cover portion with regard to the first supply valve cavity.

Preferably, the centering pins are arranged on the wings of the one or more cover portions. Each cover portion formed separately from the main cover plate preferably comprises one centering pin at each of its wings. For example, the first exhaust cover portion having two laterally extending wings preferably comprises a centering pin arranged on each of those wings. By arranging the centering pins on the wings, corresponding pin holes may be arranged outside the respective valve cavity. Such pin holes are then particularly easy to manufacture. Moreover, sealing of the respective valve cavity is facilitated. However, it is also preferred that the centering pins engage the main body in the respective valve cavity.

According to a preferred embodiment, the cover portion or the cover portions comprise one or more centering pins for centering the cover portion with respect to the corresponding cavity, even if the separately formed cover portion or cover portions comprise no wings.

Preferably, openings of the first supply valve cavity, the second supply valve cavity, the first exhaust valve cavity, the second exhaust valve cavity and the relay valve cylinder lie in a common opening plane of the main body. Preferably, the opening plane is a main dividing plane of the brake modulator. Generally, the surfaces of the body comprising the openings of the first supply valve cavity, the second supply valve cavity, the first exhaust valve cavity, the second exhaust valve cavity and the relay valve cylinder need to be precisely machined such that closure of said opening can be ensured and leaks are prevented. However, machining of rough surfaces takes time and thus increases manufacturing cost. By arranging all of the openings in a common opening plane, the surfaces of the main body comprising the openings of the first supply valve cavity, the second supply valve cavity, the first exhaust valve cavity, the second exhaust valve cavity and the relay valve cylinder can be machined in one step and manufacturing cost may be reduced.

In a further preferred embodiment, the first supply cover portion, the second supply cover portion, the first exhaust cover portion, the second exhaust cover portion, the relay valve cover plate and/or the main cover (or its main cover plate) are made from a plastic material. Preferably, all of the first supply cover portion, the second supply cover portion, the first exhaust cover portion, the second exhaust cover portion, the relay valve cover plate and the main cover plate are made from a plastic material. Plastic materials are usually cost effective and therefore well suited for parts produced at high quantities. By forming the first supply cover portion, the second supply cover portion, the first exhaust cover portion, the second exhaust cover portion, the relay valve cover plate, the main cover plate and/or the main cover from a plastic material, the overall cost of the brake modulator can be reduced. Moreover, plastic materials have good insulating properties. However, the manufacturing accuracies achievable without extensive effort are limited when using plastic materials. The inventors have found that the inventive concept of a first supply cover portion, second supply cover portion, first exhaust cover portion and/or second exhaust cover portion formed separately from the main cover plate enables the use of plastic materials at reasonable cost. However, cost efficiency is further improved when the relay valve cover plate is formed separate from the main cover. The main cover then comprises even less tolerance dependencies and is therefore manufacturable with lower tolerances, since it does not have to close the relay valve cylinder.

By forming one or more cover portions separately from the main cover plate, complexity of the main cover is reduced and it may therefore be produced using a larger variety of plastic materials. Preferably, the main cover plate and the first supply cover portion, the second supply cover portion, the first exhaust cover portion, the second exhaust cover portion and/or the relay valve cover plate are formed from the same type of plastic material. The first supply cover portion, the second supply cover portion, the first exhaust cover portion, the second exhaust cover portion, the relay valve cover plate relay valve cover plate and/or the main cover may however also be formed from different materials. Preferably, the first supply cover portion, the second supply cover portion, the first exhaust cover portion, the second exhaust cover portion, the relay valve cover plate and/or the main cover (or the main cover plate) are made from polypropylene, polystyrene, poly-carbonate, polyamide, polyoxymethylen, acrylonitrile butadiene styrene and/or polyvinyl chloride.

According to a preferred embodiment, the first supply cover portion, the second supply cover portion, the first exhaust cover portion, the second exhaust cover portion, the relay valve cover plate and/or the main cover plate are made by injection molding. Injection molding is particularly suited for high quantity production. Generally, relatively high tolerances are required for manufacturing plastic components by injection molding. Injection molding is thus usually not applicable for components having long tolerance chains without expensive post processing. By splitting the tolerance chain through forming the first supply cover portions, second supply cover portion, first exhaust cover portion and/or second exhaust cover portion separately from the main cover plate, injection molding is possible for said components. Manufacturing cost of the brake modulator may be reduced.

Preferably, the first ABS supply valve and/or the first ABS exhaust valve are formed as diaphragm valves and/or the second ABS supply valve and/or the second ABS exhaust valve are formed as diaphragm valves. Diaphragm valves allow for high volume flows while being adapted for fast actuation speeds required for providing an ABS function.

In a further preferred embodiment, each diaphragm comprises a shoulder abutting a corresponding interior collar of the respective valve cavity. Preferably, the respective cover portion clamps the shoulder of the respective diaphragm to the interior collar of the corresponding valve cavity. For example, the first supply cover portion may clamp a shoulder of the first ABS supply valve to an interior collar of the first supply valve cavity. The shoulders of the diaphragms abutting corresponding shoulders may ensure proper alignment of the diaphragm inside the corresponding cavity. By clamping the diaphragms in between the respective cover portion and the interior collar of the corresponding valve cavity the diaphragm may be laterally fixed.

In a preferred further development, the first ABS valve unit comprises a first ABS solenoid valve for providing a first ABS control pressure for controlling the first ABS supply valve or the first ABS exhaust valve dependent on the first ABS control signal, and wherein the second ABS valve unit comprises a second ABS solenoid valve for providing a second ABS control pressure for controlling the second ABS supply valve or the second ABS exhaust valve dependent on the second ABS control signal. Solenoid valves are controllable via electrical signals and particularly suited for controlling the ABS valves, since solenoid valves generally have a fast reaction time. Owing to the need to control large volume flows and the need for correspondingly large flow cross sections to be opened and closed, the supply valves and the exhaust valves are preferably designed as pneumatically actuable valves.

Preferably, the main cover, particularly preferred the main cover plate of the main cover, comprises a first ABS control pressure conduit connecting the first ABS solenoid valve to the first supply cover portion and/or the first exhaust cover portion, and/or wherein the main cover comprises a second ABS control pressure conduit connecting the second ABS solenoid valve to the second supply cover portion and/or the second exhaust cover portion. Via the first pressure conduit and the second pressure conduit, ABS control pressures may be provided from the ABS solenoid valves to the ABS supply valves and/or the ABS exhaust valves. Besides closing of the assembly side, the main cover, particularly preferred the main cover plate, then further functions as a pressure distribution system or part of such a system. The control first ABS control pressure conduit and/or the second ABS control pressure conduit may be formed in the main cover plate, the first supply cover portion, the second supply cover portion, the first exhaust cover portion and/or the second exhaust cover portion.

It is further preferred that the brake modulator comprises an electric control connection for receiving an electronic brake request and a control solenoid valve for providing a pneumatic brake request to the relay valve dependent on the electronic brake request. The brake modulator is then controllable via electric signals. The electronic brake request may be provided by an electronic control unit and/or an electronic foot brake module. When the electronic brake request is provided by an electronic control unit, the brake modulator is usable for fully autonomous or semi-autonomous vehicles. Alternatively or additionally, the brake modulator comprises a pneumatic control port for receiving a pneumatic brake request. Such a pneumatic brake request may be provided by a known pneumatic foot brake module or an electro-pneumatic foot brake module.

In a second aspect of the invention, the above stated problem is solved by an assembly method for a brake modulator, in particular a brake modulator according to the first aspect of the invention, comprising the steps: Providing a main body; inserting a relay valve into a relay valve cylinder of the main body from an assembly side; inserting a first ABS supply valve into a first supply valve cavity of the main body from the assembly side; inserting a first ABS exhaust valve into a first exhaust valve cavity of the main body from the assembly side; inserting a second ABS supply valve into a second supply valve cavity of the main body from the assembly side; inserting a second ABS exhaust valve in a second exhaust valve cavity of the main body from the assembly side; closing an opening of the first supply valve cavity towards the assembly side with a first supply cover portion; closing an opening of the second supply valve cavity towards the assembly side with a second supply cover portion; closing an opening of the first exhaust valve cavity towards the assembly side with a first exhaust cover portion; closing an opening of the second exhaust valve cavity towards the assembly side with a second exhaust cover portion, closing the assembly side of the main body with a main cover plate of the main cover, wherein one or more cover portions of the first supply cover portion, the second supply cover portion, the first exhaust cover portion and the second exhaust cover portion are formed separately from the main cover, wherein a main cover plate of the main cover covers the one or more separately formed cover portions when the assembly side is closed, wherein the main cover comprises a relay valve cover plate either formed separately from the main cover or integrally formed with the main cover, wherein the relay valve cover plate is arranged between a relay piston of the relay valve and the main cover along a main cylinder axis of the relay valve cylinder. The assembly method according to the invention allows for easy assembly of a brake modulator, since the valve cavities are closed prior to closing the assembly side of the main body with the main cover plate. It shall be noted that the steps of the assembly method need not necessarily be performed in the above described order. In particular, the relay valve cover plate may be inserted before the main cover plate closes the assembly side.

In a first preferred embodiment, the assembly method further comprises: clamping wings of the one or more separately formed cover portions to the main body with the main cover plate of the main cover. By clamping wings to the main body with the main cover, the separately formed cover portion or cover portions may be securely fixed to the main body. Correct positioning of the separately formed first supply cover portion, second supply cover portion, first exhaust cover portion and/or second exhaust cover portion is thereby facilitated by utilizing respective wings.

Preferably, the assembly method further comprises: centering the one or more separately formed cover portions with respect to the corresponding valve cavity with centering pins of the respective cover portions. The centering step preferably comprises: inserting the centering pins into corresponding centering holes in the main body. Pins allow for exact positioning of the separately formed cover portion or cover portions with respect to their corresponding calve cavity. A risk for misalignments is reduced. Preferably, the centering pins extend from the wings of the separately formed cover portions. However, the pins may also be formed on a cover portion body of the separately formed cover portion.

In a further preferred embodiment, the relay valve cover plate is formed separately from the main cover or its main cover plate and self-centers in the relay valve cylinder. The relay valve cover plate self-centers in the relay valve cover such that the relay valve cover plate is already correctly positioned when the main cover closes the assembly side. Correct positioning of the main cover is thereby facilitated. Preferably, the relay valve cover plate self-centers via a sealing element, preferably an O-ring, providing a lateral centering-force to the relay valve cover plate.

In a third aspect of the invention, the above stated problem is solved by a commercial vehicle comprising a brake modulator according to the first aspect of the invention. The brake modulator preferably is part of a brake system of the commercial vehicle.

It shall be understood that the assembly method for a brake modulator according to the second aspect of the invention, the commercial vehicle according to the third aspect of the invention and the brake modulator according to the first aspect of the invention comprise similar and identical embodiments which are in particular described in the dependent claims. In so far, reference is made to the above description of the brake modulator according to the first aspect of the invention.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the scope of the invention as defined by the appended claims. It is therefore intended that the invention may not be limited to the exact form and detail shown and described herein, nor to anything less than the whole of the invention disclosed herein and as claimed herein after. In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth.

In the accompanying drawings:
- Fig. 1: illustrates a vehicle having a brake system comprising a brake modulator;
- Fig. 2: shows the brake modulator in a lateral view;
- Fig. 3: shows a main body of the brake modulator in an isometric view, wherein the main body is shown partially transparent;
- Fig. 4: shows a cut view of the brake modulator according to a first embodiment;
- Fig. 5: shows a detailed cut view showing a first ABS valve unit of the brake modulator according to the first embodiment;
- Fig. 6: shows a detailed cut view of a diaphragm valve of the first ABS valve unit according to the first embodiment;
- Fig. 7: shows a main cover of the brake modulator according to a second embodiment;
- Fig. 8: shows a cut view of the brake modulator perpendicular to the cut view of Fig. 4; and
- Fig. 9: illustrates an assembly method for a brake modulator.

A vehicle 200, in particular a commercial vehicle 202, comprises a front axle FA and a rear axle RA. For braking the front axle FA and the rear axle RA the vehicle 200 comprises a brake system 204. The brake system 204 comprises a first brake circuit 206 being a front axle brake circuit 208 for the front axle FA, and a second brake circuit 210 being a rear axle brake circuit 212 for the rear axle RA. Furthermore, the brake system 204 comprises a trailer control circuit 214 for providing brake pressures to a trailer (not shown) as well as a park brake circuit 216.

For providing compressed air, the brake system 204 comprises a first compressed air supply 218, a second compressed air supply 220 and a third compressed air supply 222. In this embodiment, the first compressed air supply 218 supplies the first brake circuit 206. The second brake circuit 210 is supplied by the second compressed air supply 220, while the third compressed air supply 222 supplies the park brake circuit 216. Moreover, all compressed air supplies are at least indirectly connected to the trailer control circuit 214. In this embodiment all compressed air supplies 218, 220, 222 supply pressurized air at a supply pressure pS. However, compressed air supplies 218, 220, 222 providing different pressure levels are also preferred. For example, a pressure level of the park brake circuit 216 could be lower or higher than respective pressure levels of the first and second brake circuits 206, 210. An air treatment system, which is not shown, provides compressed air to the first, second and third compressed air supplies 218, 220, 222.

Upon actuation by a user, a foot brake valve 224 of the brake system 204 provides a pneumatic front axle brake request RBFA a front axle brake modulator 226. The front axle brake modulator 226 receives the front axle brake request RBFA as well as the supply pressure pS and provides a front axle brake pressure pBFA to front axle brake lines 228a, 228b. The front axle modulator 226 is connected to first and second front axle ABS-modules 230a, 230b, which in turn are connected to front axle brake actuators 232a, 232b. Front wheel speed sensors 234a, 234b are arranged on front wheels 236a, 236b and configured to provide a first wheel speed signal SWS1 and a second wheel speed signal SWS2 to an electronic control unit ECU of the vehicle 200. The ECU is connected to the front axle ABS-modules 230a, 230b and provides front axle ABS control signals SCFA1, SCFA2 to the front axle ABS-modules 230a, 230b. In order to prevent locking of the front wheels 236a, 236b, the front axle ABS-modules alter the front axle brake pressure pBFA supplied to the front axle brake actuators 232a, 232b dependent on the front axle ABS control signals SCFA1, SCFA2 provided by the ECU.

The front axle brake pressure pBFA is further supplied to a trailer control module 240 of the trailer control circuit 214. In order to provide an ABS function for the trailer, the front axle brake pressure pBFA supplied to the trailer control module 240 can be modulated by a trailer ABS-module 238.

The foot brake valve 224 further provides a pneumatic brake request RBP to a brake modulator 1 via a brake request line 242 connected to a control port 3 of the brake modulator 1, when the user actuates the foot brake valve 224. In this embodiment, a rear axle control pressure pCRA supplied to the control port 3 forms the pneumatic brake request RBP. The second compressed air supply 220 provides the supply pressure pS to a supply port 5 of the brake modulator 1 via a supply line 244. The brake modulator 1 provides a first brake pressure pB1 to a first brake channel 7 via a first delivery port 9. In an analogous manner, the brake modulator 1 further provides a second brake pressure pB2 to a second brake channel 11 via a second delivery port 13. The first brake channel 7 is connected to a first rear axle brake actuator 246a and a second rear axle brake actuator 246b arranged for braking a first rear wheel 248a and a second rear wheel 248b respectively on a right side 250 of the vehicle 200. The second brake channel 11 is connected to a third rear axle brake actuator 246c and a fourth rear axle brake actuator 246d for a braking a third rear wheel 248c and a fourth rear wheel 248d on a left side 252 of the vehicle 200 respectively.

For measuring a wheel speed of the rear wheels 248a, 248b, 248c, 248d rear wheel speed sensors 254a, 254b provide a third wheel speed signal SWS3 and a fourth wheel speed signal SWS4 respectively to the ECU. Based on these wheel speed signals SWS3, SWS4 provided by the rear wheel speed sensors 254a, 254b, the ECU provides a first ABS control signal SC1 and a second ABS control signal SC2 to the brake actuator 1 via ABS control lines 256a, 256b.

The brake modulator 1 further comprises an electric control connection 15 connected to the ECU via electronic brake request line 258. Via the electronic brake request line 258 an electronic brake request RBE can be provided from the ECU to the brake modulator 1.

A pressure level of the first brake pressure pB1 provided by the brake modulator 1 depends on the first ABS control signal SC1 and either the pneumatic brake request RBP or the electronic brake request RBE. In an analogous manner the pressure level of the second brake pressure pB2 provided by the brake modulator 2 to the second channel 11 depends on the second ABS control signal SC2 and either the pneumatic brake request RBP or the electronic brake request RBE. In this embodiment, the brake modulator 1 is thus controllable pneumatically and electronically. This allows for fully autonomous or semi-autonomous driving of the vehicle 200. Brake actuators 1 being only controllable via pneumatic brake requests RBP or electronic brake requests RBE are also preferred.

The rear axle brake actuators 246a, 246b, 246c, 246d are formed as tristop-cylinders configured to provide a service brake function as well as a park brake function. Park brake cylinders and service brake cylinders could also be independently formed. When the first brake pressure pB1 is supplied to the first and second rear axle brake actuators 246a, 246b at the first brake channel 7, the service brake portions of the tristop-cylinders are closed for braking right side rear wheels 248a, 248b of the vehicle 200. In an analogous manner, service brake portions of the third and fourth brake actuators 246c, 246d are closed for braking the left side wheels 248c, 248d of the vehicle 200, when the brake modulator 1 supplies the second brake pressure pB2 to the second brake channel 11.

The park brake portions of the rear axle brake actuators 246a, 246b, 246c, 246d are configured for braking the rear axle RA of the vehicle 200 in a non-pressurized state. During a drive of the vehicle 200 a brake release pressure pBR is supplied to the rear axle brake actuators 246a, 246b, 246c, 246d. When the brake release pressure pBR is supplied, spring elements (not shown) of the rear axle brake actuators 246a, 246b, 246c, 246d open and the rear axle RA is ready for driving. The brake release pressure pBR is provided to the park brake portions of the rear axle brake actuators 246a, 246b, 246c, 246d by a hand brake module 260 of the park brake circuit 216. When the user actuates the hand brake module 260, the park brake portions of the rear axle brake actuators 246a, 246b, 246c, 246d are vented and the spring elements apply the brakes to the rear wheels 248a, 248b, 248c, 248d.

While the brake system 204 comprises front axle ABS-modules 230a, 230b for providing an ABS brake function that are formed separately of the front axle brake modulator 226, an ABS brake function for the rear axle RA is integrated in the brake modulator 1, which will be described in further detail below.

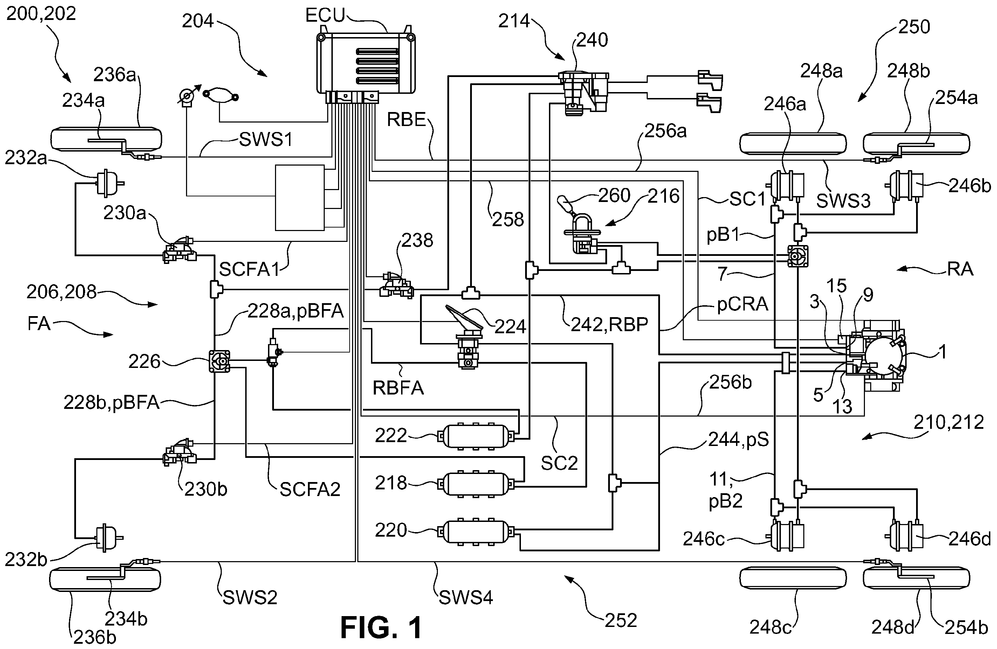

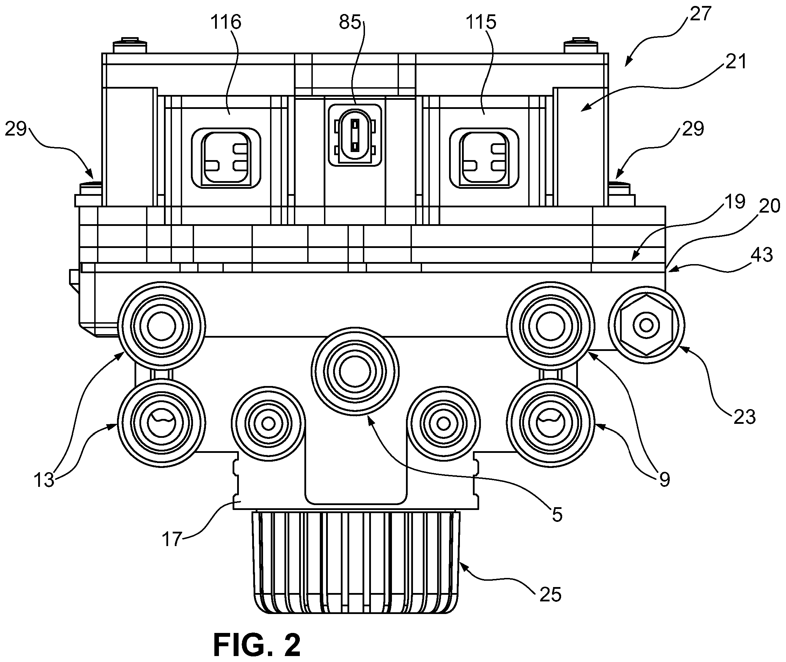

Fig. 2 shows an embodiment of the brake modulator 1 comprising a main body 17, a main cover 19 having a main cover plate 20 and an solenoid bracket 21. In this embodiment, two first delivery ports 9 for the first brake channel 7, two second delivery ports 13 for the second brake channel 11, the supply port 5, a pneumatic control port 23 and an exhaust 25 are formed on the main body 17. The main body 17 is preferably formed from aluminum. The pneumatic control port 23 here forms the control port 3. Instead of two first delivery ports 9 (one each for rear axle brake actuator 246a, 246b), both brake actuators 246a, 246b for the right side 250 of the vehicle 200 could be connected to a single first delivery port 9 (as shown in Fig. 1 for simplification). In an analogous manner the two brake actuators 246c, 246d associated to the rear wheels 248c, 248d of the left side 252 of the vehicle could be connected to a single second delivery port 13. An assembly side 27 of the main body 17 is closed by the main cover plate 20 of the main cover 19. The main cover plate 20 of the main cover 19 is arranged between the main body 17 and the solenoid bracket 21. The solenoid bracket 21 and the main cover 19 are fixed to the main body 17 with screws 29.

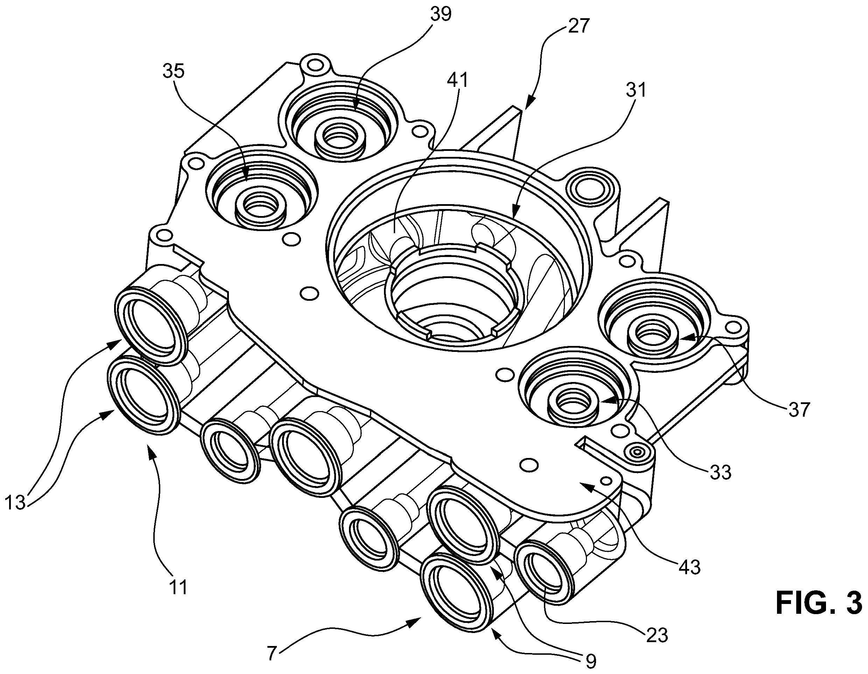

An embodiment of the main body 17 is shown in Fig. 3. A relay valve cylinder 31 formed in the main body 17 is connected to a first supply valve cavity 33 and a second supply valve cavity 35 via internal channels (not shown in Fig. 3) formed in the main body 17. The first supply valve cavity 33 is connected to the first delivery ports 9 of the first brake channel 7 and to a first exhaust valve cavity 37. In an analogous manner, the second supply valve cavity 35 is connected to the second delivery ports 13 of the second brake channel 11 and to a second exhaust valve cavity 39. The first exhaust valve cavity 37 and the second exhaust valve cavity 39 are connected to the exhaust 25 via exhaust channels 41 (only exhaust channel 41 connecting the second exhaust valve cavity 39 to the exhaust 25 is shown in Fig. 2). Opposite the assembly side 27, the relay valve cylinder 31 connects to the exhaust 25 as well. In this embodiment, openings of the relay valve cylinder 31, the first supply valve cavity 33, the second supply valve cavity 35, the first exhaust valve cavity 37 and the second exhaust valve cavity 39 towards the assembly side 27 all lie in a common opening plane 43 being a common dividing plane of the brake modulator 1.

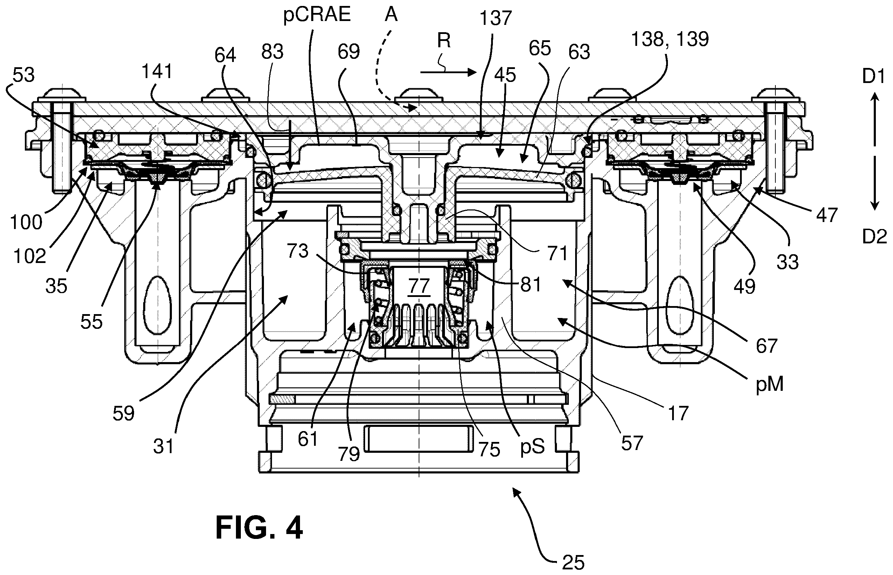

In the assembled brake modulator 1 (shown in Fig. 4), a relay valve 45 is received in the relay valve cylinder 31, a first ABS supply valve 49 of a first ABS valve unit 47 is received in the first supply valve cavity 33, a first ABS exhaust valve 51 of the first ABS valve unit 47 is received in the first exhaust valve cavity 37, a second ABS supply valve 55 of a second ABS valve unit 53 is received in the second supply valve cavity 35 and a second exhaust valve of the second ABS valve unit 53 is received in the second exhaust valve cavity 39. The relay valve 45 is configured to receive a pneumatic brake request RBP in the form of the rear axle control pressure pCRA via the pneumatic control port 23 and the supply pressure pS via the supply port 5. Dependent on the rear axle control pressure pCRA the relay valve 45 provides pressurized air at a main pressure pM to the first ABS supply valve 49 and the second ABS supply valve 55. The relay valve 45 therefore modulates the supply pressure pS. Besides possible leakages, no fluid connection exits between the first brake channel 7 and the pneumatic control port 23 or the second brake channel 11 and the pneumatic control port 23. The rear axle control pressure pCRA is only utilized for controlling the pressure level of the main pressure pM supplied to the first ABS supply valve 49 of the first ABS valve unit 47 and the second ABS supply valve 55 of the second ABS valve unit 53.

A divider 57 of the main body 17 divides the relay valve cylinder 31 into a piston chamber 59 and a valve chamber 61. A relay piston 63 of the relay valve 45 is slidably received in the piston chamber 59. Portions of the piston chamber 59 arranged on opposite sides of the relay piston 63 are referred to as a control pressure side 65 and a working side 67. The relay piston 63 is slidable along a main cylinder axis A of the relay valve cylinder 31. The main cylinder axis A is defined by an inner wall 64 of the relay valve cylinder 31. The control pressure side 65 receives the rear axle control pressure pCRA and the working side 67 is connected to the first supply valve cavity 33 and the second supply valve cavity 35 for providing the main pressure pM to the first ABS valve unit 47 and the second ABS valve unit 53 respectively.

In Fig. 4, the relay piston 63 is shown in an exhaust position 69, wherein a piston shaft 71 of the relay piston 63 is spaced apart from a relay valve member 73 of the relay valve 45. The relay valve member 73 is slidably arranged on a guide element 75 such that it is movable along the main cylinder axis A in a first direction D1 towards the assembly side 27 and in a second direction D2 away from the assembly side 27 (up and down with respect to Fig. 4). The guide element 75 has an inner relay valve exhaust channel 77 connecting the working side 63 of the piston chamber 59 to the exhaust 25, when the piston shaft 71 of the relay piston 63 is spaced apart from the relay valve member 73.

A relay valve return spring 79 of the relay valve 45 is received on the guide element 75 and biases the relay valve member 73 towards a valve seat 81. A fluid communication between the relay valve chamber 61 receiving the supply pressure pS from the supply port 5 and the working side 67 is interrupted by the relay valve member 73 contacting the valve seat 81.

In the exhaust position 69 shown in Fig. 4, the first delivery port 9 and the second delivery port 13 are in fluid connection to the exhaust 25 via the working side 67 of the relay valve chamber 61 and the inner relay valve exhaust channel 77 such that no main pressure pS is supplied to the first brake channel 7 and the second brake channel 11. Instead the relay valve member 73 seals the relay valve chamber 61.

In order to supply a main pressure pS to the first brake channel 7 and the second brake channel 11 the relay piston 63 needs to be moved to an at least partially open position. For moving the relay piston 63, the rear axle control pressure pCRA is provided to the control pressure side 65. Since the working side 67 of the relay valve chamber 61 is in fluid communication with the exhaust 25 when the relay piston 63 is in the exhaust position 69, a pressure level on the working side 67 is substantially equal to an environmental pressure level. Therefore a pressure differential between the working side 67 and the control pressure side 65 is established when the rear axle control pressure pCRA is provided to the control pressure side 65. This pressure differential results in a force on the relay piston 63 illustrated by arrow 83. This force resulting from the pressure differential moves the relay piston 63 from the exhaust position 69 towards the relay valve member 73 (downwards with respect to Fig. 4). When the piston shaft 71 of the relay piston 63 comes into contact with the relay valve member 73, a sealing contact is established between the piston shaft 71 and the relay valve member 73. Thereby the piston shaft 71 interrupts a fluid connection between the working side 67 of the piston chamber 59 and the exhaust 25 via the inner relay valve exhaust channel 77. The first ABS supply valve 49 and the second ABS supply valve 55 are then no longer connected to the exhaust 25.

The force acting on the relay piston 63 persists, since no pressure change has occurred on the working side 67 of the piston chamber 59. The relay piston 63 abutting the relay valve member 73 moves on and the piston shaft 71 thereby pushes the relay valve member 73 against the biasing force of the relay valve return spring 79. The relay valve member 73 separates from the valve seat 81 and establishes a fluid connection between the working side 67 of the piston chamber 59 and the relay valve chamber 61 such that the first supply valve cavity 33 containing the first ABS supply valve 49 and the second supply valve cavity 35 containing the second ABS supply valve 55 respectively are connected to the supply port 5. Through this connection, a main pressure pM is supplied to the first supply valve cavity 33 and the second supply valve cavity 35. However, the pressure level of the main pressure pM is not generally equal to the supply pressure pS, since a pressure drop occurs in the gap formed between the relay valve member 73 and the valve seat 81. The pressure level of the main pressure pM depends on the size of the gap such that a main pressure pM having a low pressure level is established on the working side 67 of the piston chamber 59 immediately after the relay valve member 73 has been removed from the valve seat 81, since the gap is still relatively small.

The pressure differential between the control pressure side 65 and the working side 67 is decreased but still exists such that the relay piston 63 moves further towards a fully open position and increases the size of the gap formed between the relay valve member 73 and the valve seat 81. As the size of the gap increases, the pressure level of the main pressure pM also increases (pressure drop in the gap decreases) until the force resulting from the pressure differential between the working side 67 and the control pressure side 65 equals a biasing force provided by the relay valve return spring 79 and movement of the relay piston 63 is stopped. The pressure level of the main pressure pM therefore depends on the control pressure provided to the control pressure side 65 of the piston chamber 59.

The control pressure may be provided to the control pressure side 65 pneumatically as the rear axle control pressure pCRA or as an electronically controlled rear axle control pressure pCRAE. For providing the electronically controlled rear axle control pressure pCRAE, the brake modulator 1 comprises a control solenoid valve 85. The control solenoid valve 85 (cf. Fig. 2) receives the supply pressure pS via the supply port 5 and provides a pneumatic brake request RBP in the form of the electronically controlled rear axle control pressure pCRAE to the relay valve 45, in particular to the control pressure side 65 of the piston chamber 59 dependent on the electronic brake request RBE. In this embodiment, the relay valve 45 is thus controllable pneumatically via the rear axle control pressure pCRAE received at the pneumatic control port 23 or electronically via the control solenoid valve 85 which transforms an electronic brake request RBE (preferably provided by the ECU) into a pneumatic brake request RBP.

For returning the relay piston 63 to the exhaust position 69, the pneumatic brake request RBP (the rear axle control pressure pCRA or the electronically controlled rear axle control pressure pCRAE) is reduced until it is lower than the main pressure pM on the working side 67. A force (not shown) resulting from the pressure differential moves the relay piston 63 back to the exhaust position 69 (upwards with respect to Fig. 4). As long as the piston shaft 71 of the relay piston 63 contacts the valve seat 81, the relay valve return spring 79 helps moving the relay piston 63 towards the exhaust position 69. Upon further motion towards the exhaust position 69, the relay piston 63 disconnects from the valve seat 81 such that the working side 67 is connected to the inner relay valve exhaust channel 77.

During normal operation, the first ABS valve unit 47 supplies the main pressure pS received from the relay valve 45 as the first brake pressure pB1 to the first brake channel 7 via the first delivery ports 9 and the second ABS valve unit 53 analogously supplies the second brake pressure pB2 to the second brake channel 11 via the second delivery ports 13. Under certain conditions, the ABS valve units 47, 53 modulate the first brake pressure pB1 and the second brake pressure pB2 respectively such that the first brake pressure pB1 and the second brake pressure pB2 differ from the main pressure pM supplied by the relay valve 45, in order to prevent locking of the rear wheels 248a, 248b, 248c, 248d. In this embodiment, the first ABS valve unit 47 and the second ABS valve unit 53 are identical in structure, such that their function will be described with regard to the first ABS valve unit 47 in the following.

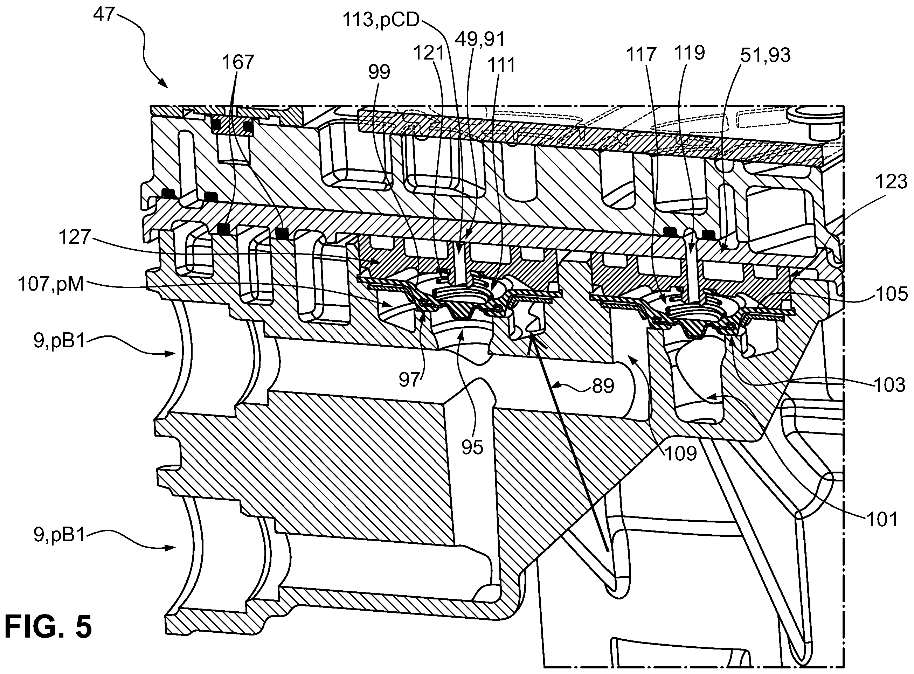

The first ABS valve unit 47 comprises the first ABS supply valve 49 and the first ABS exhaust valve 51, which are formed as a supply diaphragm valve 91 and an exhaust diaphragm valve 93 in this embodiment (Fig. 5). The supply diaphragm valve 91 has a cylindrical central delivery passage 95 having a circular supply valve seat 97 facing a supply diaphragm 99 of the supply diaphragm valve 91. Analogously the exhaust diaphragm valve 93 has a cylindrical exhaust passage 101 having a circular exhaust valve seat 103 facing an exhaust diaphragm 105.

An annular outer supply passage 107 is arranged concentrically with the supply valve seat 97 and connected to the working side 67 of the piston chamber 59 for receiving the main pressure pM (indicated by arrow 89). The central delivery passage 95 of the supply diaphragm valve 91 is directly connected to the first supply ports 9 and to an annular outer exhaust passage 109 of the exhaust diaphragm valve 93.

On a side of the supply diaphragm 99 opposite the supply valve seat 97, the supply diaphragm valve 91 comprises a supply control chamber 111 into which a first ABS control pressure conduit 113 opens. The first ABS control pressure conduit 113 is (partially) formed in a first supply cover portion 127 of the main cover 19. The control pressure conduit 113 further extends in the main cover plate 20 (this section is not shown in Fig. 5) and connects the supply control chamber 111 to a first ABS solenoid valve 115. An exhaust control chamber 117 arranged on a side of the exhaust diaphragm 105 opposite the exhaust valve seat 103 is connected to the first ABS solenoid valve 115 via a second ABS control pressure conduit 119. The first ABS solenoid valve 115 (Fig. 2) is formed such that the supply control chamber 111 and/or the exhaust control chamber 117 are supplied with a diaphragm control pressure pCD by switching the ABS solenoid valve 115 to an open position. However, the brake modulator 1 may preferably comprise one or more individual ABS solenoid valves for each of the control chambers. For example, an ABS solenoid valve may be provided for the supply control chamber 111 while another ABS solenoid valve is provided for the exhaust control chamber 117. Preferably, such ABS solenoid valves are formed as 2/2-way valves for either providing and/or cutting off the diaphragm control pressure pCD or 3/2 way valves for providing and exhausting the respective chamber.

When the respective control chambers 111, 117 are supplied with the diaphragm control pressure pCD, the relevant diaphragm 99, 105 is pressed onto the associated valve seat 97, 103, as a result of which the relevant diaphragm 99, 105 is closed.

The supply diaphragm valve 91 (the first ABS supply valve 49) is of a normally closed type. A supply valve spring 121 pushes the supply diaphragm 99 towards the valve seat 97 when no main pressure pM is supplied to the annular outer supply passage 107.

However, when the main pressure pM is supplied to the annular outer supply passage 107 and no diaphragm control pressure pCD is provided to the control chamber 111, a pressure is then supplied from the annular outer supply passage 107 via the central delivery passage 95 to the first supply ports 9 as the first brake pressure pB1, since the main pressure pM pushes the diaphragm 99 away from the supply valve seat 97 against the force of spring 121. When the supply diaphragm valve 91 is fully open, the first brake pressure pB1 substantially equals the main pressure pM supplied by the relay valve 45. The supply diaphragm valve 91 is of a normally closed type that is closed as long as no main pressure pM is provided. However, the supply diaphragm valve 91 may be closed even if the main pressure pM is provided to the outer supply passage 107 by providing the diaphragm control pressure pCD to the supply control chamber 111. The exhaust diaphragm valve 93 is of a normally closed type such that the central delivery passage 95 and the annular outer exhaust passage 109 respectively are separated from the cylindrical exhaust passage 101 and the exhaust 25, when no main pressure pM is supplied. Even if main pressure pM is supplied to the annular outer exhaust passage 109 via the central delivery passage 95 the exhaust diaphragm valve 93 can be held in a closed position by providing the diaphragm control pressure pCD to the exhaust control chamber 117.

In case the rear wheels 248a, 248b on the right side 250 of the vehicle 200 are locked during operation such that slippage of the respective rear wheels 248a, 248b occurs and a brake effect is reduced, the first ABS solenoid valve 115 switches and supplies the diaphragm control pressure pCD to the supply control chamber 111 and releases pressure from the exhaust control chamber 117. The supply diaphragm 99 is pressed onto the supply valve seat 97 and a fluid communication between the relay valve 45 and the first supply ports 9 is interrupted. At the same time the exhaust diaphragm 105 separates from the exhaust valve seat 103 such that the first supply ports 9 are connected to the exhaust 25 via the annular outer exhaust passage 109 and the cylindrical exhaust passage 101 of the first ABS exhaust valve 51. Separation of the exhaust diaphragm 105 from the exhaust valve seat 103 occurs, since the first brake pressure pB1 lifts the exhaust diaphragm 105. The first brake channel 7 is vented and the brake actuators 246a, 246b associated to the rear wheels 248a, 248b on the right side 250 of the vehicle 200 open. Once the rear wheels 248a, 248b turn again, the first ABS solenoid valve 115 switches back and the first brake pressure pB1 is again supplied to the first brake channel 7. A respective second ABS solenoid valve 116 or multiple second ABS solenoid valves (preferably one for each control chamber) provides the function for the left side 250 of the vehicle 200.

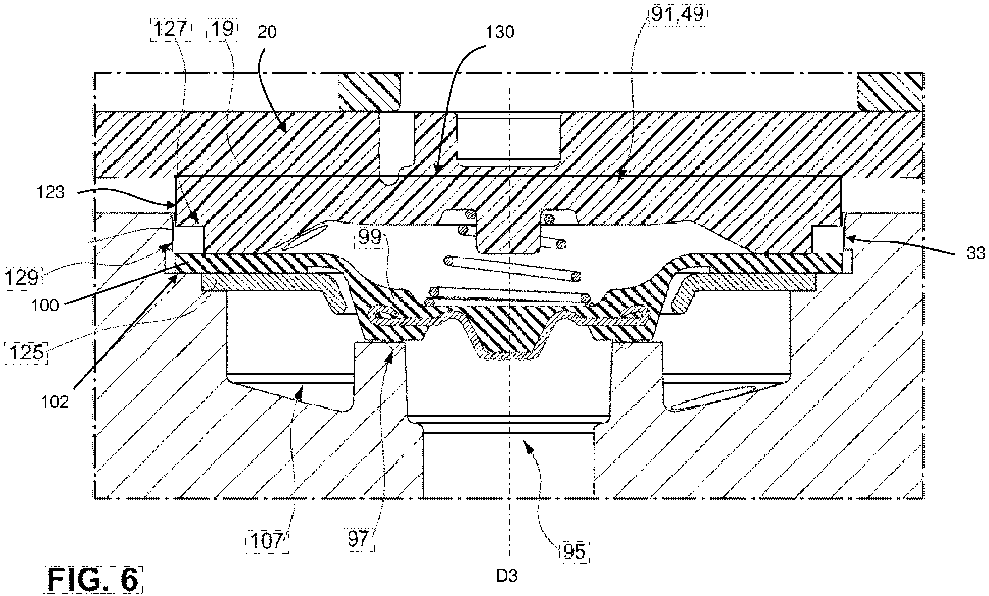

Fig. 6 shows a detailed view of the supply diaphragm valve 91. The supply diaphragm 99 is made from an elastic material. The supply diaphragm 99 is arranged along with a disc 125, between a first supply cover portion 127 of the main cover 19 and the main body 17. The diaphragm 99 comprises a shoulder 100 abutting a corresponding interior collar 102 of the first supply valve cavity 33. The shoulder 100 of the supply diaphragm 99 is clamped between the first supply cover portion 127, the interior collar 102 and disc 125.

The first supply cover portion 127 is formed separately from a main cover plate 20 of the main cover 19. The supply cover portion 127 is partially inserted into the first supply valve cavity 33. An outer circumferential surface 123 of the first supply cover portion 127 has a diameter that closely matches a first inner diameter of a centering portion 129 of the first supply valve cavity 33. A flat top side 130 of the first supply cover portion 127 abuts the flat main cover plate 20 such that the first supply cover portion 127 is held in the first supply valve cavity 33 by the main cover plate 20 in a depth direction D3 of the first supply valve cavity 33 (vertical direction in Fig. 6). A position of the first supply cover portion 127 perpendicular to this depth of the first supply valve cavity 33 (i.e. a horizontal direction in Fig. 6) is defined by the outer circumferential surface 123 and the centering portion 129, since the flat top side 130 of the first supply cover portion 127 may slide along the corresponding flat surface of the main cover plate 20. The separately formed first supply cover portion 127 may be machined at a high precision to closely fit into the first supply valve cavity 33. Moreover, since the first supply cover portion 127 is formed separately from the main cover plate 20, it may be positioned independently of said main cover plate 20 such that assembly of the brake modulator 1 is facilitated.

In this embodiment the first ABS exhaust valve 51, the second ABS supply valve 55 and the second ABS exhaust valve (not shown) are designed substantially identical to the first ABS supply valve 49 shown in Fig. 6. A first exhaust cover portion 131, a second supply cover portion 133 and a second exhaust cover portion 135 all separately formed from the main cover plate 20 close of the first exhaust valve cavity 37, the second supply valve cavity 35 and the second exhaust valve cavity 39 respectively.

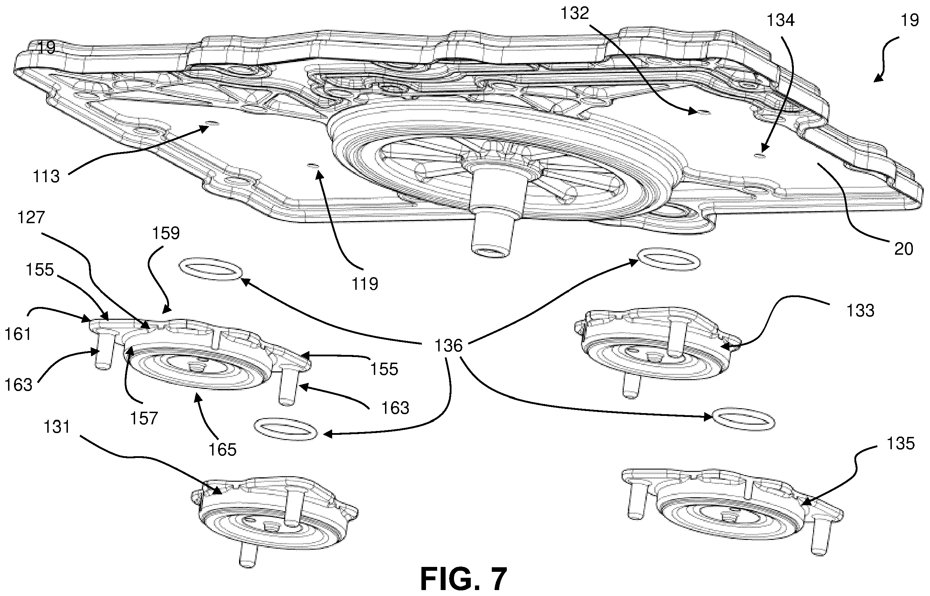

Fig. 7 shows an exploded view of the main cover 19. While Fig. 4 shows a relay valve cover plate 137 formed separately from the main cover 19, the relay valve cover plate 137 shown in Fig. 7 is integrally formed with the main cover 19. However, the arrangement of the first exhaust cover portion 131, the second supply cover portion 133 and the second exhaust cover portion 135 of the main cover 19 may be identical in both embodiments. The first supply cover portion 127, the first exhaust cover portion 131, the second supply cover portion 133 and the second exhaust cover portion 135 are all separately formed from the main cover plate 20. Besides the first ABS control pressure conduit 113 for the first ABS supply valve 49 and the second ABS control pressure conduit 119 for the first ABS exhaust valve 51, Fig. 7 further shows portions of a third ABS control pressure conduit 132 and a fourth ABS control pressure conduit 134 formed in the main cover plate 20 for providing diaphragm control pressure pCD to the second ABS supply valve 55 and the second ABS exhaust valve. Diaphragm control pressure pCD is provided through the portions of the control pressure conduits 113, 119, 132, 134 formed in the main cover plate 20 and respective portions in the first supply cover portion 127, the first exhaust cover portion 131, the second supply cover portion 133 and the second exhaust cover portion 135 to the diaphragms of the ABS valves 49, 51, 55. For sealing the control pressure conduits 113, 119, 132, 134 at the separation between the first supply cover portion 127 and the main cover plate 20, between the first exhaust cover portion 131 and the main cover plate 20, the second supply cover portion 133 and the main cover plate 133 and the main cover plate 20 as well as the second exhaust cover plate 135 and the main cover plate 20 O-rings are provided as sealing elements 136 in between the cover portions 127, 131, 133, 135 and the main cover plate 20.

In known brake modulators, the fist supply valve cavity, the second supply valve cavity, the first exhaust valve cavity and the second exhaust valve cavity are closed by respective portions integrally formed with the main cover plate of the main cover. To ensure correct alignment of such a main cover with the ABS valve cavities and the relay valve cylinder, the main cover of known brake modulators needs to be manufactured at highest precision resulting in excessive manufacturing cost, the production of scrap parts and assembly problems when the high requirements regarding the positional relationships of the cover portions are not met. In the present invention, this problem is circumvented in that the first supply cover portion 127, the second supply cover portion 133, the first exhaust cover portion 131 and the second exhaust cover portion 135 are separate elements to the main cover plate 20. The cover portions 127, 131, 133, 135 are formed separately from the main cover 19 and thereby help to rise quality in terms of leakage, control quality of the brake modulator 1 and abrasion by simplifying tolerance dependencies (i.e. shortening the tolerance chain). In the embodiment shown in Fig. 7 a relay valve cover plate 137 is integrally formed with the main cover plate 20. However, the relay valve cover plate 137 may also be formed separate from the main cover plate 20.

Correct lateral alignment of the cover portions 127, 131, 133, 135 perpendicular to a depth of their respective valve cavities 33, 35, 37, 39 is provided by outer circumferential surfaces (e.g. outer circumferential surface 123 of the first supply cover portion 127) closely matching centering portions (e.g. centering portion 129 of the first supply valve cavity 33) of their respective valve cavities 33, 35, 37, 39. In the embodiment of Fig. 7, the cover portions 127, 131, 133, 135 further comprise lateral wings 155. Each of the cover portions 127, 131, 133, 135 comprises two wings 155, laterally extending from a cover portion body 157 (only wings 155 and cover portion body 157 of the first supply cover portion 127 are provided with reference signs in Fig. 7). The wings 155 extend proximate to a cover side 159 of the cover portion body 157 oriented towards the main cover plate 20. The two respective wings 155 of the cover portions 127, 131, 133, 135 are evenly spaced around the circumference of the respective cover portion bodies 157 such that the wings 155 extend in opposite directions from the cover portion bodies 157 in this embodiment.

After assembly of the cover portions 127, 131, 133, 135 into their respective valve cavities 33, 35, 37, 39, the wings 155 abut the common opening plane 43 such that a position of the cover portions 127, 131, 133, 135 with regard to a depth of their respective valve cavities (the depth is measured perpendicular to the common opening plane 43 in this embodiment) is defined by the wings 155. Correct positioning of the cover portions 127, 131, 133, 135 can thereby be ensured. Moreover, the wings 155 prevent excessive clamping forces on the diaphragms of the ABS valves 49, 51, 55.

The wings 155 taper from the cover portion body 157 towards a wing tip 161. When viewed along a depth direction D3 (cf. Fig. 6), the wings 155 have a substantially triangular shape. However, the wings 155 may also have any other shape such as a rectangular, semicircular, oval and/or trapezoidal shape when viewed along the depth direction D3. For defining an angular position of the respective cover portion 127, 131, 133, 135 within its respective valve cavity 33, 35, 37, 39 (i.e. a rotational orientation of the cover portion around a rotational axis defined in the depth direction D3), each cover portion 127, 131, 133, 135 comprises two centering pins 163. In the embodiment depicted in Fig. 7, one centering pin 163 extends from each wing 155 in the depth direction D3. However, it shall be understood, that the cover portions 127, 131, 133, 135 may only comprise a single centering pin 163 or more than two centering pins 163 and that the centering pins 163 may also extend from other portions of the respective cover portions 127, 131, 133, 135 such as, for example, the cover portion body 157. In particular, the centering pins 163 extend from the wing tips 161. Each centering pin 163 has a substantially cylindrical shape. However, the pins may also have an angular cross section and/or a conical shape.

During assembly the centering pins 163 are inserted into corresponding centering or pin holes (not shown in the figures) provided in the main body 17. The centering pins 163 facilitate proper positioning of the respective cover portion 127, 131, 133, 135 in its corresponding valve cavity 33, 35, 37, 39 during assembly of the brake modulator 1. The centering pins 163 extend beyond a bottom face 165 of the cover portion body 157 in the depth direction D3. Thus, the centering pins 163 are the first portions of the cover portion 127, 131, 133, 135 engaging the main body 17. Proper alignment of the cover portion body 157 with regard to the respective valve cavity 33, 35, 37, 39 is ensured such that damages to the cover portion body 157 and in particular its circumferential surface 123 are prevented, when the cover portion body 157 is inserted in the respective valve cavity 33, 35, 37, 39 during assembly of the brake modulator 1.

Sealing of the first supply valve cavity 33, the second supply valve cavity 35, the first exhaust valve cavity 37 and the second exhaust valve cavity 39 is ensured by cover sealing elements 167 provided in the main cover plate 20 (Fig. 5). Moreover, the diameter of each outer circumferential surface 123 of the cover portion body 157 of each cover portion 127, 131, 133, 135 preferably fits a corresponding inner diameter of the corresponding valve cavity 33, 35, 37, 39 such that the valve cavities 33, 35, 37, 39 are sealed towards the assembly side 27.

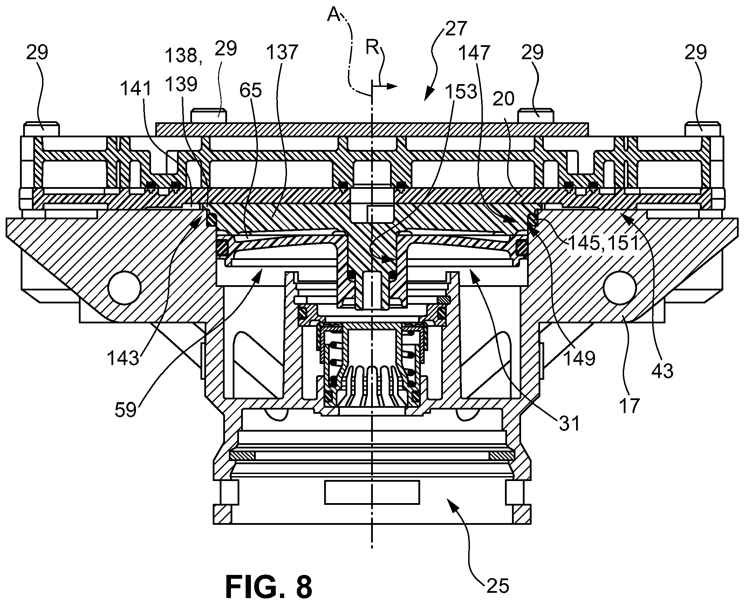

In an alternative embodiment (cf. Fig. 8), the relay valve cover plate 137 is separately formed from the main cover plate 20. Hence, in this embodiment, besides the cover portions 127, 131, 133, 135 also the relay valve cover plate 137 is formed separately from the main cover plate 20. This helps to rise quality in terms of leakage, control quality of the brake modulator 1 and abrasion by simplifying tolerance dependencies. When regarded along the main cylinder axis A, the relay valve cover plate 137 is arranged between the relay piston 63 and the main cover plate 20. In the present embodiment, the relay valve cover plate 137 is partially inserted in the relay valve cylinder 31. A flange portion 138 formed as a shoulder 139 abuts the main body 17 on the assembly side 27, in particular in the common opening plane 43. The shoulder 139 of the relay valve cover plate 137 is clamped to the main body 17 by the main cover 19. It is however also preferred that the relay valve cover plate 137 is fully inserted into the relay valve cylinder 31. The relay valve cover plate 137 may then be prevented from moving along the main cylinder axis A by a positive connection formed between the shoulder 139, the main cover 19 and the main body 17. For example and preferably, the relay valve cylinder 31 may comprise a stepped inner profile providing a surface for positively locking the relay valve cover plate 137 in the second direction D2.

In a radial direction R perpendicular to the main cylinder axis A, a radial clearance 141 is formed between the main cover 19 and the relay valve cover plate 137. In this embodiment, the relay valve cylinder 31 has a cylindrical shape. The relay valve cover plate 137 has a corresponding round outer contour 143 such that the radial clearance 141 has an annular shape. In other embodiments, for instance when the relay valve cover plate has an angular outer contour, the size of the radial clearance 141 may vary. Before the shoulder 139 of the relay valve cover plate 137 is clamped to the main body 17 via the main cover 19 (by the screws 29), the relay valve cover plate 137 is movable in the radial direction R independently of the main cover 19. In comparison to known one piece constructions, the main cover 17 of the brake modulator 1 according to the present invention can be manufactured having lower tolerances, since the relay valve cover plate 137 is provided separately and since misalignments are compensated by the radial clearance 141. The main cover 17 and the relay valve cover plate 137 are therefore producible from plastic materials, preferably by injection molding, resulting in low unit cost.

The relay valve cover plate 137 is arranged laterally self-centering (with respect to the main cylinder axis A) in the relay valve cylinder 31. The relay valve cover plate 137 is arranged such that it centers itself in the relay valve cylinder 31 (on the main cylinder axis A) by laterally moving in the radial direction R before being clamped to the main body 19. The self-centering arrangement further facilitates assembly of the brake modulator 1, since the relay valve cover plate 137 can be inserted in the relay valve cylinder 31 and centers itself.

A sealing member 145 arranged between an outer circumferential surface 147 of the relay valve cover plate 137 and a sealing surface 149 of the relay valve cylinder 31 prevents leakage of pressurized air from the control pressure side 65 of the piston chamber 59 towards the main cover 19. Here, an O-ring 151 forms the sealing member 145. The O-ring 151 further provides the self-centering arrangement of the relay valve cover plate 137. When compressed in the radial direction R, the O-ring 151 is deformed and provides a counter force acting against this deformation. As soon as the force deforming the O-ring 151 is withdrawn, the O-ring 151 returns to its initial ring shape. Thereby the O-ring 151 automatically centers the relay valve cover plate 137 in the relay valve cylinder 31. The self-centering of the relay valve cover plate 137 is thus achieved without the need to provide external centering forces. Since, the main body 17 is preferably made from aluminum, the portion of the inner wall 64 facing the O-ring 151 can be precisely manufactured.

The relay valve cover plate 137 further comprises a guide portion 153 extending along the main cylinder axis A. The piston shaft 71 of the relay piston 63 is slidably arranged on the guide portion 153. The guide portion 153 guides the stroke movement of the relay piston 63 from the exhaust position 69 towards the relay valve member 73 and back. Moreover, the guide portion 153 facilitates assembly of the relay valve 45. The relay piston 63 can be assembled together with the relay valve cover plate 137 prior to insertion into the relay valve cylinder 31 of the main body 17. During assembly, the correct orientation of the relay piston 63 is then automatically ensured by the self-centering arrangement of the relay valve cover plate 137.

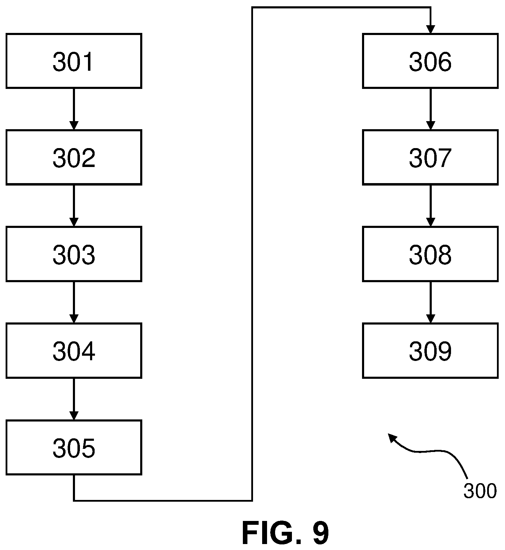

Fig. 9 illustrates an assembly method 300 for the brake modulator 1. In a first step 301 a main body 17 of the brake modulator 1 is provided. In a second step 302 the relay valve 45 is inserted into the relay valve cylinder 31. In a third step 303 the first ABS supply valve 49 is inserted into the first supply valve cavity 33 of the main body 17 from the assembly side 27, the first ABS exhaust valve 51 is inserted into the first exhaust valve cavity 37 of the main body 17 from the assembly side 27, the second ABS supply valve 55 is inserted into the second supply valve cavity 35 of the main body 17 from the assembly side 27 and the second exhaust valve is inserted into the second exhaust valve cavity 39 of the main body 17 from the assembly side 27. The second step 302 and the third step 303 may also be performed in reverse order. In a fourth step 304 the opening of the relay valve cylinder 31 towards the assembly side 27 is closed with the relay valve cover plate 137. During the fourth step 304, the relay valve cover plate 137 centers itself in the relay valve cylinder 31 with the O-ring 151 such that no external centering force or forces need to be provided. The fourth step 304 may also be performed prior to the third step 303.

After insertion of the relay valve 45, the first ABS valve unit 47 and the second ABS valve unit 53 into the main body 17 (steps 302 to 304), the first supply valve cavity 33, the second supply valve cavity 35, the first exhaust valve cavity 37 and the second exhaust valve cavity 39 are closed by fully and/or partially inserting the first supply cover portion 127, the second supply cover portion 133, the first exhaust cover portion 131 and the second exhaust cover portion 135 respectively in a fifth step 305. The fifth step 305 may be performed prior to the fourth step 304 or the first step 301 as long as it is performed after the third step 303.

After the first supply cover portion 127, the second cover portion 133, the first exhaust cover portion 131 and the second exhaust cover portion 135 have been inserted into their corresponding valve cavities 33, 35, 37, 39 (fifth step 305) and after the relay valve cylinder 31 has been closed by the relay valve cover plate 137 (fourth step 304), the assembly side 27 of the main body 17 is closed by the main cover 19 in a sixth step 306. It shall be noted, that in the described embodiment the cover portions 127, 131, 133, 135 are only partially inserted into their corresponding cavities 33, 35, 37, 39 during the fifth step 305. The first supply cover portion 127 is at least partially positioned in the first supply valve cavity 33, the second supply cover portion 133 is at least partially positioned in the second supply valve cavity 35, the first exhaust cover portion 131 is at least partially positioned in the first exhaust valve cavity 37 and the second exhaust cover portion 135 is at least partially positioned in the second exhaust valve cavity 39. Preferably, the first supply cover portion 127 is centered in the first supply valve cavity 33, the second supply cover portion 133 is centered in the second supply valve cavity 35, the first exhaust cover portion 131 is centered in the first exhaust valve cavity 37 and/or the second exhaust cover portion 135 is centered in the second exhaust valve cavity 39 during the fifth step 305.

During a sixth step 306 the main cover plate 20 covers the relay valve cover plate 137, the first supply cover portion 127, the first exhaust cover portion 131, the second supply cover portion 133 and the second exhaust cover portion 135. The main cover plate 20 holds the first supply cover portion 127 in the first supply valve cavity 33, the first exhaust cover portion 131 in the first exhaust valve cavity 37, the second supply cover portion 133 in the second supply valve cavity 35, the second exhaust cover portion 135 in the second exhaust valve cavity 39 and the relay valve cover plate 137 in the relay valve cylinder 31. The main cover plate 20 thus prevents the cover portions 127, 131, 133, 135 from falling out of their corresponding cavity 33, 35, 37, 39. In a seventh step 307 306 the main cover 19 is fixed to the main body 17 with screws 29, whereby the main cover plate 20 of the main cover 19 clamps the shoulder 139 of the relay valve cover plate 137 against the main body 17. After that the solenoid bracket 21 is provided on top of the main cover plate 20 in an eight step 308 before the main body 17, the main cover plate 20 and the solenoid bracket 21 are fixed to each other with additional screws 29 in a ninth step 309.

### List of reference signs (Part of the description)

- 1: brake modulator
- 3: control port
- 5: supply port
- 7: first brake channel
- 9: first delivery port
- 11: second brake channel
- 13: second delivery port
- 15: electronic control port
- 17: main body
- 19: main cover
- 20: main cover plate
- 21: solenoid bracket
- 23: pneumatic control port
- 25: exhaust
- 27: assembly side
- 29: screws
- 31: relay valve cylinder
- 33: first supply valve cavity
- 35: second supply valve cavity
- 37: first exhaust valve cavity
- 39: second exhaust valve cavity
- 41: exhaust channels
- 43: opening plane
- 45: relay valve
- 47: first ABS valve unit
- 49: first ABS supply valve
- 51: first ABS exhaust valve
- 53: second ABS valve unit
- 55: second ABS supply valve
- 57: divider
- 59: piston chamber
- 61: relay valve chamber
- 63: relay piston
- 64: inner wall of the relay valve cylinder
- 65: control pressure side or control pressure chamber
- 67: working side
- 69: exhaust position
- 71: piston shaft
- 73: relay valve member
- 75: guide element
- 77: inner relay valve exhaust channel
- 79: relay valve return spring
- 81: valve seat
- 83: arrow indicating force on the relay piston or more specifically, force resulting from the control pressure as there can also be opposite one from a bottom chamber.(or piston chamber 59)
- 85: control solenoid valve
- 89: arrow indication supply of main pressure or the delivery pressure from relay valve 45
- 91: supply diaphragm valve
- 93: exhaust diaphragm valve
- 95: central delivery passage
- 97: supply or inlet valve seat
- 99: supply diaphragm
- 100: shoulder
- 101: cylindrical exhaust passage
- 102: interior collar
- 103: exhaust valve seat
- 105: exhaust diaphragm
- 107: annular outer supply passage
- 109: annular outer exhaust passage
- 111: supply or inlet control chamber
- 113: first ABS control pressure conduit
- 115: first ABS solenoid valve
- 116: second ABS solenoid valve
- 117: exhaust control or inlet chamber
- 119: second ABS control pressure conduit
- 121: supply valve spring
- 123: outer circumferential surface of cover portion
- 125: disc
- 127: first supply cover portion
- 129: centering portion
- 130: flat top side
- 131: first exhaust cover portion
- 132: third ABS control pressure conduit
- 133: second supply cover portion
- 134: fourth ABS control pressure conduit
- 135: second exhaust cover portion
- 136: sealing elements
- 137: relay valve cover plate
- 138: flange portion
- 139: shoulder
- 141: radial clearance
- 143: round outer contour
- 145: sealing member
- 147: outer circumferential surface
- 149: sealing surface
- 151: O-ring
- 153: guide portion
- 155: wings
- 157: cover portion body
- 159: cover side
- 161: wing tip
- 163: centering pins
- 165: bottom face
- 167: cover sealing elements
- 200: vehicle
- 202: commercial vehicle
- 204: brake system
- 206: first brake circuit
- 208: front axle brake circuit
- 210: second brake circuit
- 212: rear axle brake circuit
- 214: trailer control circuit
- 216: park brake circuit
- 218: first compressed air supply
- 220: second compressed air supply
- 222: third compressed air supply
- 224: foot brake valve
- 226: front axle brake modulator
- 228a, 228b: front axle brake lines
- 230a, 230b: front axle ABS-modules
- 232a, 232b: front axle brake actuators
- 234a, 234b: front wheel speed sensors
- 236a, 236b: front wheels
- 238: trailer ABS-module
- 240: trailer control module
- 242: brake request line
- 244: supply line
- 246a, 246b, 246c, 246d: rear axle brake actuators
- 248a, 248b, 248c, 248d: rear wheels
- 250: right side of the vehicle
- 252: left side of the vehicle
- 254a, 254b: rear wheel speed sensor
- 256a, 256b: ABS control lines
- 258: electronic brake request line
- 260: hand brake module
- 301: first step
- 302: second step
- 303: third step
- 304: fourth step
- 305: fifth step
- 306: sixth step
- 307: seventh step
- 308: eighth step
- 309: ninth step
- A: main cylinder axis
- D1: first direction
- D2: second direction
- D3: depth direction
- ECU: electronic control unit
- FA: front axle
- pBFA: front axle brake pressure
- pBR: brake release pressure
- pB1: first brake pressure
- pB2: second brake pressure
- pCD: diaphragm control pressure
- pCRA: rear axle control pressure
- pCRAE: electronically controlled rear axle control pressure
- pS: supply pressure
- pM: main pressure
- R: radial direction
- RA: rear axle
- RBE: electronic brake request
- RBP: pneumatic brake request
- RBFA: pneumatic front axle brake request
- SC1: first ABS control signal
- SC2: second ABS control signal
- SCFA1, SCFA2: front axle ABS control signals
- SWS1: first wheel speed signal
- SWS2: second wheel speed signal
- SWS3: third wheel speed signal
- SWS4: fourth wheel speed signal

## Claims

1. A brake modulator (1) for providing an ABS brake function to a vehicle (200), the brake modulator (1) comprising
a main body (17) having a first supply valve cavity (33), a second supply valve cavity (35), a first exhaust valve cavity (37), a second exhaust valve cavity (39), and a relay valve cylinder (31) having a main cylinder axis (A), wherein the first supply valve cavity (33), the second supply valve cavity (35), the first exhaust valve cavity (37), the second exhaust valve cavity (39) and the relay valve cylinder (31) open towards an assembly side (27) of the main body (17);
a supply port (5) for receiving supply pressure (pS),
a relay valve (45) configured to receive the supply pressure (pS) and to provide main pressure (pM) dependent on a brake request or driver's brake demand, wherein the relay valve (45) is received in the relay valve cylinder (31),
an ABS valve arrangement comprising a first ABS valve unit (47) for a first brake channel (7) and a second ABS valve unit (53) for a second brake channel (11),
wherein the first ABS valve unit (47) is configured to receive the main pressure (pM) and to provide first brake pressure (pB1) to the first brake channel (7) dependent on a first ABS control signal (SC1), wherein a first ABS supply valve (49) of the first ABS valve unit (47) is received in the first supply valve cavity (33), and a first ABS exhaust valve (51) of the first ABS valve unit (47) is received in the first exhaust valve cavity (37), and
wherein the second ABS valve unit (53) is configured to receive the main pressure (pM) and to provide second brake pressure (pB2) to the second brake channel (11) dependent on a second ABS control signal (SC2), wherein a second ABS supply valve (55) of the second ABS valve unit (53) is received in the second supply valve cavity (35), and a second ABS exhaust valve of the second ABS valve unit (53) is received in the second exhaust valve cavity (39), and
a main cover (19) for closing of the assembly side (27) of the main body (17),
wherein the main cover (19) comprises a first supply cover portion (127) for the first supply valve cavity (33), a second supply cover portion (133) for the second supply valve cavity (35), a first exhaust cover portion (131) for the first exhaust valve cavity (37), and a second exhaust cover portion (135) for the second exhaust valve cavity (39),
**characterized in that**
the brake modulator (1) further comprises a relay valve cover plate (137) for closing the relay valve cylinder (31) on the assembly side (27), wherein the relay valve cover plate (137) is either formed separately from the main cover (19) or is integrally formed with the main cover (19), wherein the relay valve cover plate (137) is arranged between a relay piston (63) of the relay valve (45) received in the relay valve cylinder (31) and the main cover (19) along the main cylinder axis (A), and
wherein one or more cover portions (127, 131, 133, 135) of the first supply cover portion (127), the second supply cover portion (133), the first exhaust cover portion (131) and the second exhaust cover portion (135) is formed separately from a main cover plate (20) of the main cover (19).

2. The brake modulator (1) according to claim 1, wherein the main cover plate (20) of the main cover (19) holds the one or more cover portions (127, 131, 133, 135) formed separately from the main cover (19) in its respective cavity (33, 35, 37, 39).

3. The brake modulator (1) according to claim 1, wherein the one or more cover portions (127, 131, 133, 135) formed separately from the main cover (19) comprise wings (155), the wings (155) laterally extending from a cover portion body (157) of the respective cover portion (127, 131, 133, 135), wherein the main cover (19) preferably clamps the laterally extending wings (155) of the one or more cover portions (127, 131, 133, 135) to the main body (17).

4. The brake modulator (1) according to claim 3, wherein
The one or more cover portions (127, 131, 133, 135) formed separately from the main cover (19) comprise one or more centering pins (163) for centering the cover portion (127, 131, 133, 135) with respect to the corresponding cavity (33, 35, 37, 39).

5. The brake modulator (1) according to claim 4, wherein
the centering pins (163) are arranged on the wings (155) of the one or more cover portions (127, 131, 133, 135).

6. The brake modulator (1) according to claim 1, wherein
one or more of the cover portions (127, 131, 133, 135) comprises one or more centering pins (159) for centering the cover portion (127, 131, 133, 135) with respect to the corresponding cavity (33, 35, 37, 39).

7. The brake modulator (1) according to claim 1, wherein openings of the first supply valve cavity (33), the second supply valve cavity (35), the first exhaust valve cavity (37), the second exhaust valve cavity (39) and the relay valve cylinder (31) lie in a common opening plane (43) of the main body (17).

8. The brake modulator (1) according to claim 1, wherein the first supply cover portion (127), the second supply cover portion (133), the first exhaust cover portion (131), the second exhaust cover portion (135), relay valve cover plate (137) and/or the main cover plate (20) are made from a plastic material.

9. The brake modulator (1) according to claim 8, wherein the first supply cover portion (127), the second supply cover portion (133), the first exhaust cover portion (131), the second exhaust cover portion (135), the relay valve cover plate (137) and/or the main cover plate (20) are made by injection molding.

10. The brake modulator (1) according to claim 1, wherein the first ABS supply valve (49) and/or the first ABS exhaust valve (51) are formed as diaphragm valves (91, 93) and wherein the second ABS supply valve (55) and/or the second ABS exhaust valve are formed as diaphragm valves.

11. The brake modulator (1) according to claim 10, wherein each diaphragm valve comprises a diaphragm (99, 105) having a shoulder (100) abutting a corresponding interior collar (102) of the respective valve cavity (33, 35, 37, 39).

12. The brake modulator (1) according to claim 1, wherein the first ABS valve unit (47) comprises a first ABS solenoid valve (115) for providing a first ABS control pressure for controlling the first ABS supply valve (49) or the first ABS exhaust valve (51) dependent on the first ABS control signal (SC1), and wherein the second ABS valve unit (53) comprises a second ABS solenoid valve (116) for providing a second ABS control pressure for controlling the second ABS supply valve (55) or the second ABS exhaust valve dependent on the second ABS control signal (SC2).

13. The brake modulator (1) according to claim 12, wherein the main cover (19) comprises a first ABS control pressure conduit (113) connecting the first ABS solenoid valve (115) to the first supply cover portion (127) or the first exhaust cover portion (131), and wherein the main cover (19) comprises a second ABS control pressure conduit (119) connecting the second ABS solenoid valve (116) to the second supply cover portion (133) or the second exhaust cover portion (135).

14. An assembly method (300) for a brake modulator (1), in particular a brake modulator (1) according to any of the claims 1 to 13, comprising the steps:
- Providing a main body (17);
- inserting a relay valve (45) into a relay valve cylinder (31) of the main body (17) from an assembly side (27);
- inserting a first ABS supply valve (49) into a first supply valve cavity (33) of the main body (17) from the assembly side (27);
- inserting a first ABS exhaust valve (51) into a first exhaust valve cavity (37) of the main body (17) from the assembly side (27);
- inserting a second ABS supply valve (55) into a second supply valve cavity (35) of the main body (17) from the assembly side (27);
- inserting a second ABS exhaust valve in a second exhaust valve cavity (39) of the main body (17) from the assembly side (27);
- closing an opening of the first supply valve cavity (33) towards the assembly side (27) with a first supply cover portion (127);
- closing an opening of the second supply valve cavity (35) towards the assembly side (27) with a second supply cover portion (133);
- closing an opening of the first exhaust valve cavity (37) towards the assembly side (27) with a first exhaust cover portion (131);
- closing an opening of the second exhaust valve cavity (39) towards the assembly side (27) with a second exhaust cover portion (135);
- closing the assembly side (27) of the main body (17) with a main cover plate (20) of the main cover (19), wherein one or more cover portions (127, 131, 133, 135) of the first supply cover portion (127), the second supply cover portion (133), the first exhaust cover portion (131) and the second exhaust cover portion (135) are formed separately from the main cover (19), wherein a main cover plate of the main cover (19) covers the one or more separately formed cover portions (127, 131, 133, 135) when the assembly side (27) is closed, wherein the main cover (19) comprises a relay valve cover plate (137) either formed separately from the main cover (19) or integrally formed with the main cover (19), wherein the relay valve cover plate (137) is arranged between a relay piston (63) of the relay valve (45) and the main cover (19) along a main cylinder axis (A) of the relay valve cylinder (31).

15. The assembly method (300) of claim 14, further comprising:
- clamping wings (155) of the one or more separately formed cover portions (127, 131, 133, 135) to the main body (17) with the main cover plate (20) of the main cover (19).

16. The assembly method (300) of claim 14, further comprising:
- centering the one or more separately formed cover portions (127, 131, 133, 135) with respect to the corresponding valve cavity (33, 35, 37, 39) with centering pins (163) of the respective cover portions (127, 131, 133, 135).

17. The assembly method (300) of claim 14, wherein the relay valve cover plate (137) is formed separately from the main cover (19) and self-centers in the relay valve cylinder (31).

18. A commercial vehicle (202) comprising a brake system (204) comprising a brake modulator (1) according to any of the claims 1 to 13.

## Patentansprüche

1. Bremsmodulator (1) zum Bereitstellen einer ABS-Bremsfunktion für ein Fahrzeug (200), wobei der Bremsmodulator (1) umfasst
einen Hauptkörper (17) mit einem ersten Zufuhrventilraum (33), einem zweiten Zufuhrventilraum (35), einem ersten Auslassventilraum (37), einem zweiten Auslassventilraum (39), und einen Relaisventilzylinder (31) mit einer Hauptzylinderachse (A), wobei der erste Zufuhrventilraum (33), der zweite Zufuhrventilraum (35), der erste Auslassventilraum (37), der zweite Auslassventilraum (39) und der Relaisventilzylinder (31) sich zu einer Anordnungsseite (27) des Hauptkörpers (17) hin öffnen;
einen Zufuhranschluss (5) zum Empfangen von Vorratsdruck (pS),
ein Relaisventil (45), das konfiguriert ist, um den Vorratsdruck (pS) aufzunehmen und in Abhängigkeit von einer Bremsanforderung oder dem Bremsbedarf des Fahrers einen Hauptdruck (pM) bereitzustellen, wobei das Relaisventil (45) in dem Relaisventilzylinder (31) aufgenommen ist,
eine ABS-Ventilanordnung, umfassend eine erste ABS-Ventileinheit (47) für einen ersten Bremskanal (7) und eine zweite ABS-Ventileinheit (53) für einen zweiten Bremskanal (11), wobei die erste ABS-Ventileinheit (47) konfiguriert ist, um den Hauptdruck (pM) aufzunehmen und in Abhängigkeit von einem ersten ABS-Steuersignal (SC1) dem ersten Bremskanal (7) den ersten Bremsdruck (pB1) bereitzustellen, wobei ein erstes ABS-Zufuhrventil (49) der ersten ABS-Ventileinheit (47) in dem ersten Zufuhrventilraum (33) und ein erstes ABS-Auslassventil (51) der ersten ABS-Ventileinheit (47) in dem ersten Auslassventilraum (37) angeordnet sind, und
wobei die zweite ABS-Ventileinheit (53) konfiguriert ist, um den Hauptdruck (pM) aufzunehmen und in Abhängigkeit von einem zweiten ABS-Steuersignal (SC2) dem zweiten Bremskanal (11) einen zweiten Bremsdruck (pB2) bereitzustellen, wobei ein zweites ABS-Zufuhrventil (55) der zweiten ABS-Ventileinheit (53) in dem zweiten Zufuhrventilraum (35) und ein zweites ABS-Auslassventil der zweiten ABS-Ventileinheit (53) in dem zweiten Auslassventilraum (39) aufgenommen sind, und eine Hauptabdeckung (19) zum Verschließen der Anordnungsseite (27) des Hauptkörpers (17), wobei
die Hauptabdeckung (19) einen ersten Zufuhrabdeckungsabschnitt (127) für den ersten Zufuhrventilraum (33), einen zweiten Zufuhrabdeckungsabschnitt (133) für den zweiten Zufuhrventilraum (35), einen ersten Auslassabdeckungsabschnitt (131) für den ersten Auslassventilraum (37) und einen zweiten Auslassabdeckungsabschnitt (135) für den zweiten Auslassventilraum (39) umfasst,
**dadurch gekennzeichnet, dass**
der Bremsmodulator (1) ferner eine Relaisventilabdeckplatte (137) zum Verschließen des Relaisventilzylinders (31) auf der Anordnungsseite (27) umfasst, wobei die Relaisventilabdeckplatte (137) entweder separat von der Hauptabdeckung (19) ausgebildet oder mit der Hauptabdeckung (19) einstückig ausgebildet ist, wobei die Relaisventilabdeckplatte (137) zwischen einem Relaiskolben (63) des in dem Relaisventilzylinder (31) aufgenommenen Relaisventils (45) und der Hauptabdeckung (19) entlang der Hauptzylinderachse (A) angeordnet ist, und
wobei ein oder mehrere Abdeckungsabschnitte (127, 131, 133, 135) des ersten Zufuhrabdeckungsabschnitts (127), des zweiten Zufuhrabdeckungsabschnitts (133), des ersten Auslassabdeckungsabschnitts (131) und des zweiten Auslassabdeckungsabschnitts (135) separat von einer Hauptabdeckplatte (20) der Hauptabdeckung (19) ausgebildet sind.

2. Bremsmodulator (1) nach Anspruch 1, wobei die Hauptabdeckplatte (20) der Hauptabdeckung (19) den einen oder die mehreren von der Hauptabdeckung (19) separat ausgebildeten Abdeckungsabschnitte (127, 131, 133, 135) in ihrem jeweiligen Hohlraum (33, 35, 37, 39) hält.

3. Bremsmodulator (1) nach Anspruch 1, wobei der eine oder die mehreren von der Hauptabdeckung (19) separat ausgebildeten Abdeckungsabschnitte (127, 131, 133, 135) Flügel (155) umfassen, wobei die Flügel (155) sich seitlich von einem Abdeckungsabschnittskörper (157) des jeweiligen Abdeckungsabschnitts (127, 131, 133, 135) erstrecken, wobei die Hauptabdeckung (19) vorzugsweise die sich seitlich erstreckenden Flügel (155) des einen oder der mehreren Abdeckungsabschnitte (127, 131, 133, 135) an den Hauptkörper (17) klemmt.

4. Bremsmodulator (1) nach Anspruch 3, wobei
der eine oder die mehreren von der Hauptabdeckung (19) separat ausgebildeten Abdeckungsabschnitte (127, 131, 133, 135) einen oder mehrere Zentrierstifte (163) zum Zentrieren des Abdeckungsabschnitts (127, 131, 133, 135) in Bezug auf den entsprechenden Hohlraum (33, 35, 37, 39) umfassen.

5. Bremsmodulator (1) nach Anspruch 4, wobei
die Zentrierstifte (163) auf den Flügeln (155) des einen oder der mehreren Abdeckungsabschnitte (127, 131, 133, 135) angeordnet sind.

6. Bremsmodulator (1) nach Anspruch 1, wobei
einer oder mehrere der Abdeckungsabschnitte (127, 131, 133, 135) einen oder mehrere Zentrierstifte (159) zum Zentrieren des Abdeckungsabschnitts (127, 131, 133, 135) in Bezug auf den entsprechenden Hohlraum (33, 35, 37, 39) umfassen.

7. Bremsmodulator (1) nach Anspruch 1, wobei Öffnungen des ersten Zufuhrventilraums (33), des zweiten Zufuhrventilraums (35), des ersten Auslassventilraums (37), des zweiten Auslassventilraums (39) und des Relaisventilzylinders (31) in einer gemeinsamen Öffnungsebene (43) des Hauptkörpers (17) liegen.

8. Bremsmodulator (1) nach Anspruch 1, wobei der erste Zufuhrabdeckungsabschnitt (127), der zweite Zufuhrabdeckungsabschnitt (133), der erste Auslassabdeckungsabschnitt (131), der zweite Auslassabdeckungsabschnitt (135), die Relaisventilabdeckplatte (137) und/oder die Hauptabdeckplatte (20) aus einem Kunststoffmaterial gefertigt sind.

9. Bremsmodulator (1) nach Anspruch 8, wobei der erste Zufuhrabdeckungsabschnitt (127), der zweite Zufuhrabdeckungsabschnitt (133), der erste Auslassabdeckungsabschnitt (131), der zweite Auslassabdeckungsabschnitt (135), die Relaisventilabdeckplatte (137) und/oder die Hauptabdeckplatte (20) im Spritzgussverfahren hergestellt sind.

10. Bremsmodulator (1) nach Anspruch 1, wobei das erste ABS-Zufuhrventil (49) und/oder das erste ABS-Auslassventil (51) als Membranventile (91, 93) ausgebildet sind und wobei das zweite ABS-Zufuhrventil (55) und/oder das zweite ABS-Auslassventil als Membranventile ausgebildet sind.

11. Bremsmodulator (1) nach Anspruch 10, wobei jedes Membranventil eine Membran (99, 105) mit einer Schulter (100) umfasst, die an einen entsprechenden inneren Kragen (102) des jeweiligen Ventilraums (33, 35, 37, 39) anliegt.

12. Bremsmodulator (1) nach Anspruch 1, wobei die erste ABS-Ventileinheit (47) ein erstes ABS-Magnetventil (115) zum Bereitstellen eines ersten ABS-Steuerdrucks zum Steuern des ersten ABS-Zufuhrventils (49) oder des ersten ABS-Auslassventils (51) in Abhängigkeit von dem ersten ABS-Steuersignal (SC1) umfasst, und wobei die zweite ABS-Ventileinheit (53) ein zweites ABS-Magnetventil (116) zum Bereitstellen eines zweiten ABS-Steuerdrucks zum Steuern des zweiten ABS-Zufuhrventils (55) oder des zweiten ABS-Auslassventils in Abhängigkeit von dem zweiten ABS-Steuersignal (SC2) umfasst.

13. Bremsmodulator (1) nach Anspruch 12, wobei die Hauptabdeckung (19) eine erste ABS-Steuerdruckleitung (113) umfasst, die das erste ABS-Magnetventil (115) mit dem ersten Zufuhrabdeckungsabschnitt (127) oder dem ersten Auslassabdeckungsabschnitt (131) verbindet, und
wobei die Hauptabdeckung (19) eine zweite ABS-Steuerdruckleitung (119) umfasst, die das zweite ABS-Magnetventil (116) mit dem zweiten Zufuhrabdeckungsabschnitt (133) oder dem zweiten Auslassabdeckungsabschnitt (135) verbindet.

14. Montageverfahren (300) für einen Bremsmodulator (1), insbesondere einen Bremsmodulator (1) nach einem der Ansprüche 1 bis 13, wobei das Verfahren die Schritte umfasst:
- Bereitstellen eines Hauptkörpers (17);
- Einsetzen eines Relaisventils (45) in einen Relaisventilzylinder (31) des Hauptkörpers (17) von einer Anordnungsseite (27);
- Einsetzen eines ersten ABS-Zufuhrventils (49) in einen ersten Zufuhrventilraum (33) des Hauptkörpers (17) von der Anordnungsseite (27);
- Einsetzen eines ersten ABS-Auslassventils (51) in einen ersten Auslassventilraum (37) des Hauptkörpers (17) von der Anordnungsseite (27);
- Einsetzen eines zweiten ABS-Zufuhrventils (55) in einen zweiten Zufuhrventilraum (35) des Hauptkörpers (17) von der Anordnungsseite (27);
- Einsetzen eines zweiten ABS-Auslassventils in einen zweiten Auslassventilraum (39) des Hauptkörpers (17) von der Anordnungsseite (27);
- Verschließen einer Öffnung des ersten Zufuhrventilraums (33) zu der Anordnungsseite (27) hin mit einem ersten Zufuhrabdeckungsabschnitt (127);
- Verschließen einer Öffnung des zweiten Zufuhrventilraums (35) zu der Anordnungsseite (27) hin mit einem zweiten Zufuhrabdeckungsabschnitt (133);
- Verschließen einer Öffnung des ersten Auslassventilraums (37) zu der Anordnungsseite (27) hin mit einem ersten Auslassabdeckungsabschnitt (131);
- Verschließen einer Öffnung des zweiten Auslassventilraums (39) zu der Anordnungsseite (27) hin mit einem zweiten Auslassabdeckungsabschnitt (135);
- Verschließen der Anordnungsseite (27) des Hauptkörpers (17) mit einer Hauptabdeckplatte (20) der Hauptabdeckung (19), wobei ein oder mehrere Abdeckungsabschnitte (127, 131, 133, 135) des ersten Zufuhrabdeckungsabschnitts (127), des zweiten Zufuhrabdeckungsabschnitts (133), des ersten Auslassabdeckungsabschnitts (131) und des zweiten Auslassabdeckungsabschnitts (135) separat von der Hauptabdeckung (19) ausgebildet wird, wobei eine Hauptabdeckplatte der Hauptabdeckung (19) die separat ausgebildeten Abdeckungsabschnitte (127, 131, 133, 135) abdeckt, wenn die Anordnungsseite (27) geschlossen ist, wobei die Hauptabdeckung (19) eine Relaisventilabdeckplatte (137) entweder separat von der Hauptabdeckung (19) ausgebildet oder integral mit der Hauptabdeckung (19) ausgebildet sind, wobei die Relaisventilabdeckplatte (137) zwischen einem Relaiskolben (63) des Relaisventils (45) und der Hauptabdeckung (19) entlang einer Hauptzylinderachse (A) des Relaisventilzylinders (31) angeordnet ist.

15. Montageverfahren (300) nach Anspruch 14, ferner umfassend:
- Klemmen von Flügeln (155) des einen oder der mehreren separat ausgebildeten Abdeckungsabschnitte (127, 131, 133, 135) mit der Hauptabdeckplatte (20) der Hauptabdeckung (19) an den Hauptkörper (17).

16. Montageverfahren (300) nach Anspruch 14, ferner umfassend:
- Zentrieren des einen oder der mehreren separat ausgebildeten Abdeckungsabschnitte (127, 131, 133, 135) in Bezug auf den entsprechenden Ventilraum (33, 35, 37, 39) mit Zentrierstiften (163) der jeweiligen Abdeckungsabschnitte (127, 131, 133, 135).

17. Montageverfahren (300) nach Anspruch 14, wobei die Relaisventilabdeckplatte (137) separat von der Hauptabdeckung (19) ausgebildet ist und sich im Relaisventilzylinder (31) selbst zentriert.

18. Nutzfahrzeug (202), umfassend ein Bremssystem (204), umfassend einen Bremsmodulator (1) nach einem der Ansprüche 1 bis 13.

## Revendications

1. Modulateur de frein (1) permettant de fournir une fonction de freinage ABS à un véhicule (200), le modulateur de frein (1) comprenant
un corps principal (17) ayant une première cavité de soupape d'alimentation (33), une seconde cavité de soupape d'alimentation (35), une première cavité de soupape d'échappement (37), une seconde cavité de soupape d'échappement (39), et un cylindre de soupape relais (31) ayant un axe de cylindre principal (A), dans lequel la première cavité de soupape d'alimentation (33), la seconde cavité de soupape d'alimentation (35), la première cavité de soupape d'échappement (37), la seconde cavité de soupape d'échappement (39) et le cylindre de soupape relais (31) s'ouvrent vers un côté d'assemblage (27) du corps principal (17) ;
un orifice d'alimentation (5) permettant de recevoir une pression d'alimentation (pS),
une soupape relais (45) configurée pour recevoir la pression d'alimentation (pS) et pour fournir une pression principale (pM) en fonction d'une requête de freinage ou de la demande de freinage du conducteur, dans lequel la soupape relais (45) est reçue dans le cylindre de soupape relais (31),
un agencement de soupape ABS comprenant une première unité de soupape ABS (47) pour un premier canal de frein (7) et une seconde unité de soupape ABS (53) pour un second canal de frein (11), dans lequel la première unité de soupape ABS (47) est configurée pour recevoir la pression principale (pM) et pour fournir une première pression de freinage (pB1) au premier canal de frein (7) en fonction d'un premier signal de commande ABS (SC1), dans lequel une première soupape d'alimentation ABS (49) de la première unité de soupape ABS (47) est reçue dans la première cavité de soupape d'alimentation (33), et une première soupape d'échappement ABS (51) de la première unité de soupape ABS (47) est reçue dans la première cavité de soupape d'échappement (37), et
dans lequel la seconde unité de soupape ABS (53) est configurée pour recevoir la pression principale (pM) et pour fournir une seconde pression de freinage (pB2) au second canal de frein (11) en fonction d'un second signal de commande ABS (SC2), dans lequel une seconde soupape d'alimentation ABS (55) de la seconde unité de soupape ABS (53) est reçue dans la seconde cavité de soupape d'alimentation (35), et une seconde soupape d'échappement ABS de la seconde unité de soupape ABS (53) est reçue dans la seconde cavité de soupape d'échappement (39), et un couvercle principal (19) pour une fermeture du côté d'assemblage (27) du corps principal (17), dans lequel
le couvercle principal (19) comprend une première partie de couvercle d'alimentation (127) pour la première cavité de soupape d'alimentation (33), une seconde partie de couvercle d'alimentation (133) pour la seconde cavité de soupape d'alimentation (35), une première partie de couvercle d'échappement (131) pour la première cavité de soupape d'échappement (37), et une seconde partie de couvercle d'échappement (135) pour la seconde cavité de soupape d'échappement (39),
**caractérisé en ce que**
le modulateur de frein (1) comprend en outre une plaque de couvercle de soupape relais (137) permettant de fermer le cylindre de soupape relais (31) sur le côté d'assemblage (27), dans lequel la plaque de couvercle de soupape relais (137) est formée séparément du couvercle principal (19) ou est formée d'un seul tenant avec le couvercle principal (19), dans lequel la plaque de couvercle de soupape relais (137) est agencée entre un piston relais (63) de la soupape relais (45) reçue dans le cylindre de soupape relais (31) et le couvercle principal (19) le long de l'axe de cylindre principal (A), et
dans lequel une ou plusieurs parties de couvercle (127, 131, 133, 135) de la première partie de couvercle d'alimentation (127), de la seconde partie de couvercle d'alimentation (133), de la première partie de couvercle d'échappement (131) et de la seconde partie de couvercle d'échappement (135) sont formées séparément d'une plaque de couvercle principal (20) du couvercle principal (19).

2. Modulateur de frein (1) selon la revendication 1, dans lequel la plaque de couvercle principal (20) du couvercle principal (19) maintient la ou les parties de couvercle (127, 131, 133, 135) formées séparément du couvercle principal (19) dans sa cavité (33, 35, 37, 39) respective.

3. Modulateur de frein (1) selon la revendication 1, dans lequel la ou les parties de couvercle (127, 131, 133, 135) formées séparément du couvercle principal (19) comprennent des ailes (155), les ailes (155) s'étendant latéralement d'un corps de partie de couvercle (157) de la partie de
couvercle (127, 131, 133, 135) respective, dans lequel le couvercle principal (19) serre de préférence les ailes (155) s'étendant latéralement de la ou des parties de couvercle (127, 131, 133, 135) au corps principal (17).

4. Modulateur de frein (1) selon la revendication 3, dans lequel
la ou les parties de couvercle (127, 131, 133, 135) formées séparément du couvercle principal (19) comprennent une ou plusieurs goupilles de centrage (163) permettant de centrer la partie de couvercle (127, 131, 133, 135) par rapport à la cavité (33, 35, 37, 39) correspondante.

5. Modulateur de frein (1) selon la revendication 4, dans lequel
les goupilles de centrage (163) sont agencées sur les ailes (155) de la ou des parties de couverture (127, 131, 133, 135).

6. Modulateur de frein (1) selon la revendication 1, dans lequel
une ou plusieurs des parties de couvercle (127, 131, 133, 135) comprend une ou plusieurs goupilles de centrage (159) permettant de centrer la partie de couvercle (127, 131, 133, 135) par rapport à la cavité (33, 35, 37, 39) correspondante.

7. Modulateur de frein (1) selon la revendication 1, dans lequel des ouvertures de la première cavité de soupape d'alimentation (33), de la seconde cavité de soupape d'alimentation (35), de la première cavité de soupape d'échappement (37), de la seconde cavité de soupape d'échappement (39) et du cylindre de soupape relais (31) se trouvent dans un plan d'ouverture (43) commun du corps principal (17).

8. Modulateur de frein (1) selon la revendication 1, dans lequel la première partie de couvercle d'alimentation (127), la seconde partie de couvercle d'alimentation (133), la première partie de couvercle d'échappement (131), la seconde partie de couvercle d'échappement (135), la plaque de couvercle de soupape relais (137) et/ou la plaque de couvercle principal (20) sont fabriquées à partir d'une matière plastique.

9. Modulateur de frein (1) selon la revendication 8, dans lequel la première partie de couvercle d'alimentation (127), la seconde partie de couvercle d'alimentation (133), la première partie de couvercle d'échappement (131), la seconde partie de couvercle d'échappement (135), la plaque de couvercle de soupape relais (137) et/ou la plaque de couvercle principal (20) sont fabriquées par moulage par injection.

10. Modulateur de frein (1) selon la revendication 1, dans lequel la première soupape d'alimentation ABS (49) et/ou la première soupape d'échappement ABS (51) sont formées en guise de soupapes à membrane (91, 93) et dans lequel la seconde soupape d'alimentation ABS (55) et/ou la seconde soupape d'échappement ABS sont formées en guise de soupapes à membrane.

11. Modulateur de frein (1) selon la revendication 10, dans lequel chaque soupape à membrane comprend un diaphragme (99, 105) ayant un épaulement (100) venant en butée avec une collerette intérieure (102) correspondante de la cavité de soupape (33, 35, 37, 39) respective.

12. Modulateur de frein (1) selon la revendication 1, dans lequel la première unité de soupape ABS (47) comprend une première électrovanne ABS (115) permettant de fournir une première pression de commande ABS permettant de commander la première soupape d'alimentation ABS (49) ou la première soupape d'échappement ABS (51) en fonction du premier signal de commande ABS (SC1), et dans lequel la seconde unité de soupape ABS (53) comprend une seconde électrovanne ABS (116) permettant de fournir une seconde pression de commande ABS permettant de commander la seconde soupape d'alimentation ABS (55) ou la seconde soupape d'échappement ABS en fonction du second signal de commande ABS (SC2).

13. Modulateur de frein (1) selon la revendication 12, dans lequel le couvercle principal (19) comprend un premier conduit de pression de commande ABS (113) reliant la première électrovanne ABS (115) à la première partie de couvercle d'alimentation (127) ou à la première partie de couvercle d'échappement (131), et
dans lequel le couvercle principal (19) comprend un second conduit de pression de commande ABS (119) reliant la seconde électrovanne ABS (116) à la seconde partie de couvercle d'alimentation (133) ou à la seconde partie de couvercle d'échappement (135).

14. Procédé d'assemblage (300) pour un modulateur de frein (1), dans un modulateur de frein (1) particulier selon l'une quelconque des revendications 1 à 13, comprenant les étapes :
- fourniture d'un corps principal (17) ;
- insertion d'une soupape relais (45) dans un cylindre de soupape relais (31) du corps principal (17) à partir d'un côté d'assemblage (27) ;
- insertion d'une première soupape d'alimentation ABS (49) dans une première cavité de soupape d'alimentation (33) du corps principal (17) à partir du côté d'assemblage (27) ;
- insertion d'une première soupape d'échappement ABS (51) dans une première cavité de soupape d'échappement (37) du corps principal (17) à partir du côté d'assemblage (27) ;
- insertion d'une seconde soupape d'alimentation ABS (55) dans une seconde cavité de soupape d'alimentation (35) du corps principal (17) à partir du côté d'assemblage (27) ;
- insertion d'une seconde soupape d'échappement ABS dans une seconde cavité de soupape d'échappement (39) du corps principal (17) à partir du côté d'assemblage (27) ;
- fermeture d'une ouverture de la première cavité de soupape d'alimentation (33) vers le côté d'assemblage (27) avec une première partie de couvercle d'alimentation (127) ;
- fermeture d'une ouverture de la seconde cavité de soupape d'alimentation (35) vers le côté d'assemblage (27) avec une seconde partie de couvercle d'alimentation (133) ;
- fermeture d'une ouverture de la première cavité de soupape d'échappement (37) vers le côté d'assemblage (27) avec une première partie de couvercle d'échappement (131) ;
- fermeture d'une ouverture de la seconde cavité de soupape d'échappement (39) vers le côté d'assemblage (27) avec une seconde partie de couvercle d'échappement (135) ;
- fermeture du côté d'assemblage (27) du corps principal (17) avec une plaque de couvercle principal (20) du couvercle principal (19), dans lequel une ou plusieurs parties de couvercle (127, 131, 133, 135) de la première partie de couvercle d'alimentation (127), de la seconde partie de couvercle d'alimentation (133), de la première partie de couvercle d'échappement (131) et de la seconde partie de couvercle d'échappement (135) sont formées séparément du couvercle principal (19), dans lequel une plaque de couvercle principal du couvercle principal (19) recouvre la ou les parties de
couvercle (127, 131, 133, 135) formées séparément lorsque le côté d'assemblage (27) est fermé, dans lequel le couvercle principal (19) comprend une plaque de couvercle de soupape relais (137) formée séparément du couvercle principal (19) ou formée d'un seul tenant avec le couvercle principal (19), dans lequel la plaque de couvercle de soupape relais (137) est agencée entre un piston relais (63) de la soupape relais (45) et le couvercle principal (19) le long d'un axe de cylindre principal (A) du cylindre de soupape relais (31).

15. Procédé d'assemblage (300) selon la revendication 14, comprenant en outre :
- serrage des ailes (155) de la ou des parties de
couvercle (127, 131, 133, 135) formées séparément au corps principal (17) avec la plaque de couvercle principal (20) du couvercle principal (19).

16. Procédé d'assemblage (300) selon la revendication 14, comprenant en outre :
- centrage de la ou des parties de couvercle (127, 131, 133, 135) formées séparément par rapport à la cavité de soupape (33, 35, 37, 39) correspondante avec des goupilles de centrage (163) des parties de couvercle (127, 131, 133, 135) respectives.

17. Procédé d'assemblage (300) selon la revendication 14, dans lequel la plaque de couvercle de soupape relais (137) est formée séparément du couvercle principal (19) et s'auto-centre dans le cylindre de soupape relais (31).

18. Véhicule commercial (202) comprenant un système de freinage (204) comprenant un modulateur de frein (1) selon l'une quelconque des revendications 1 à 13.
